# EUROPEAN PATENT SPECIFICATION

(11) **EP 4 611 314 B1**
(45) Date of publication and mention of the grant of the patent: **18.11.2026**
(21) Application number: 24792796.5
(22) Date of filing: 30.01.2024
(51) Int. Cl.: G05D 1/648, H04L 12/28, A47L 9/28, G05D 105/10, A47L 11/40, G05D 1/224, G05D 107/40, G05D 109/10, G05D 111/30, G05D 1/247

(54) **CLEANER, METHOD FOR CONTROLLING CLEANER, CLEANING SYSTEM, AND METHOD FOR CONTROLLING CLEANING SYSTEM**
REINIGER, VERFAHREN ZUR STEUERUNG DES REINIGERS, REINIGUNGSSYSTEM UND VERFAHREN ZUR STEUERUNG DES REINIGUNGSSYSTEMS
DISPOSITIF DE NETTOYAGE, PROCÉDÉ DE COMMANDE DE DISPOSITIF DE NETTOYAGE, SYSTÈME DE NETTOYAGE ET PROCÉDÉ DE COMMANDE DE SYSTÈME DE NETTOYAGE

(30) Priority: 17.04.2023 KR 20230050341; 20.06.2023 KR 20230079314
(43) Date of publication of application: 03.09.2025
(73) Proprietor: Samsung Electronics Co., Ltd., Suwon-si, Gyeonggi-do 16677 (KR)
(72) Inventor: SEO, Kangjun, Suwon-si, Gyeonggi-do 16677 (KR); PARK, Hyelim, Suwon-si, Gyeonggi-do 16677 (KR); SUNG, Soohyun, Suwon-si, Gyeonggi-do 16677 (KR); SON, Jonghyun, Suwon-si, Gyeonggi-do 16677 (KR); SHIN, Kyoungha, Suwon-si, Gyeonggi-do 16677 (KR); SHIN, Dongmin, Suwon-si, Gyeonggi-do 16677 (KR); JANG, Myoungsoo, Suwon-si, Gyeonggi-do 16677 (KR); CHO, Chihong, Suwon-si, Gyeonggi-do 16677 (KR)
(74) Representative: Gulde & Partner
(86) International application number: PCT/KR2024/001422
(87) International publication number: WO 2024/219608

(56) References cited:
- JP-A- 2016 087 106
- JP-A- 2020 192 171
- JP-A- 2023 018 577
- KR-A- 20210 151 853
- KR-A- 20220 114 873
- KR-A- 20220 114 873
- KR-B1- 101 667 708
- US-A1- 2021 008 726

## Description

### [TECHNICAL FIELD]

The disclosure relates to a cleaner including an output interface.

### [BACKGROUND ART]

Robots have been developed for industrial use and have taken part of factory automation. With further expansion of robot application areas these days, medical robots, aerospace robots, service robots, or the like, have been developed and even home robots that may be used at homes have also been developed. Among these robots, a robot that is able to travel by itself is called a mobile robot.

A prime example of the mobile robot is a robot cleaner for cleaning indoor space. The mobile robot may identify objects located in the indoor space and create a map of the indoor space while traveling in the indoor space. The mobile robot may use the map of the indoor space to clean the indoor space. The mobile robot may also collect environmental data of the indoor space.

Due to the limit of the robot cleaner that is unable to clean every corner of all areas, a manual cleaner operated by the user himself/herself is still required despite the advancement of the robot cleaners.

Recently, more and more users tend to have both the robot cleaner and the manual cleaner.

The above information is presented as background information only to assist with an understanding of the disclosure. No determination has been made, and no assertion is made, as to whether any of the above might be applicable as prior art with regard to the disclosure. JP 2016 087106 A relates to a cleaning support device determining and processing location information and map data to indicate a cleaned and a non-cleaned area to a manual vacuum cleaner. KR 2022 0114873 A relates to a robot cleaner cooperatively performing cleaning operations through communication with a manual cleaner, providing the user with an integrated cleaning guide. US 2021/008726 A1 relates to a mobile robot communicating with a user robot, wherein the mobile robot transmits information of a movement space to the user robot and in turn receives information on a cleaned or not cleaned area from the user robot.

### [DISCLOSURE]

### [Technical Problem]

Aspects of the disclosure are to address at least the above-mentioned problems and/or disadvantages and to provide at least the advantages described below. Accordingly, an aspect of the disclosure is to provide a cleaner for a user to clean a non-cleaned zone with ease.

Another aspect of the disclosure is to provide a cleaner for a user to reach a non-cleaned zone with ease.

Another aspect of the disclosure is to provide a cleaner for a user to constantly check a non-cleaned zone while operating a cleaner.

Another aspect of the disclosure is to provide a cleaner where locations of a cleaner are identified with ease.

According to an Another aspect of the disclosure is to provide a cleaner to receive information about a non-cleaned zone based on various communication methods.

Additional aspects will be set forth in part in the description which follows and, in part, will be apparent from the description, or may be learned by practice of the presented embodiments.

### [Technical Solution]

The invention is set out in the appended set of claims.

### [Advantageous Effects]

According to an embodiment of the disclosure, a display of the cleaner is automatically rotated to a direction making it easy for the user to observe the display when a certain condition is satisfied, thereby increasing user convenience.

According to an embodiment of the disclosure, the user is able to turn the display of the cleaner to a direction to easily observe the display, thereby increasing the user convenience.

According to an embodiment of the disclosure, the cleaner includes an output interface, thereby easily delivering various information to the user.

According to an embodiment of the disclosure, the cleaner includes a radio communication tag, thereby identifying an accurate location of the cleaner with a plurality of wireless communication anchors installed in an indoor space.

According to an embodiment of the disclosure, the cleaner is able to communicate with a server through a docking station even without having a communication module which is able to communicate with the server. According to an embodiment of the disclosure, a relatively heavy communication module does not need to be installed in the cleaner that requires to be lightened.

According to an embodiment of the disclosure, the user is guided into the non-cleaned zone at a suitable time by outputting guidance information only when the user intends to use the cleaner.

According to an embodiment of the disclosure, when the user wants to use the cleaner and separates the cleaner from the docking station, the guidance information is output, and thus, the user immediately checks what zone needs to be cleaned.

According to an embodiment of the disclosure, when the user wants to use the cleaner and powers on the cleaner, the guidance information is output, and thus, the user immediately checks what zone needs to be cleaned.

According to an embodiment of the disclosure, when the user intends to clean the non-cleaned zone with the cleaner, a guidance command is transmitted to the cleaner, and the guidance information is automatically output by the cleaner.

According to an embodiment of the disclosure, when the user intends to perform cleaning with a manual cleaner, the user is guided directly to the non-cleaned zone requiring to be cleaned.

According to an embodiment of the disclosure, as the guidance information is output through the output interface of the cleaner, the user checks a non-cleaned zone even while holding and moving the cleaner.

According to an embodiment of the disclosure, the user checks the information about the non-cleaned zone remotely.

According to an embodiment of the disclosure, when the user intends to clean the non-cleaned zone with the cleaner, guidance information is output on the cleaner.

According to an embodiment of the disclosure, the location of the cleaner is identified more accurately based on the sensor fusion data.

According to an embodiment of the disclosure, as an accurate location of the cleaner is identified, more specific guidance information is provided.

According to an embodiment of the disclosure, providing a route of the cleaner gives the user an interest to find the way to a non-cleaned zone.

According to an embodiment of the disclosure, providing the route of the cleaner makes it easy for the user to find the way to the non-cleaned zone.

According to an embodiment of the disclosure, the user intuitively checks the route for the user to go to clean the non-cleaned zone.

According to an embodiment of the disclosure, projecting a route of the cleaner onto the surface of the ground or an object in front gives the user an interest to find the way to the non-cleaned zone.

According to an embodiment of the disclosure, providing the route of the cleaner on the surface of the ground or the front object makes it easy for the user to find the way to the non-cleaned zone.

According to an embodiment of the disclosure, tactile information gives the user an interest to find the way to the non-cleaned zone.

According to an embodiment of the disclosure, people unable to recognize visual information (e.g., the blind) easily finds the way to the non-cleaned zone and efficiently perform cleaning.

According to an embodiment of the disclosure, as the information about the non-cleaned zone stored in the robot cleaner, the user equipment, the server, the cleaner and/or the docking station is updated, the user checks an accurate cleaning state of the space to be cleaned in real time.

The effects according to the disclosure are not limited thereto, and throughout the specification it will be clearly appreciated by those of ordinary skill in the art that there may be other effects unmentioned.

### [DESCRIPTION OF DRAWINGS]

FIG. 1 illustrates a network system including a cleaner according to an embodiment of the disclosure;
FIG. 2 illustrates an exterior of a robot cleaner according to an embodiment of the disclosure;
FIG. 3 illustrates a side of a robot cleaner shown in FIG. 2 according to an embodiment of the disclosure;
FIG. 4 illustrates a control block diagram of a robot cleaner according to an embodiment of the disclosure;
FIG. 5 is a flowchart illustrating a procedure in which a robot cleaner creates a cleaning map according to an embodiment of the disclosure;
FIG. 6 illustrates a cleaning map according to an embodiment of the disclosure;
FIG. 7 illustrates a user equipment outputting a cleaning map according to an embodiment of the disclosure;
FIG. 8 illustrates a cleaner coupled to a docking station according to an embodiment of the disclosure;
FIG. 9 is an enlarged view of a portion of a cleaner according to an embodiment of the disclosure
FIG. 10 is a side cross-sectional view of a portion of a cleaner according to an embodiment of the disclosure;
FIG. 11 illustrates an exterior of a cleaner according to an embodiment of the disclosure;
FIG. 12 illustrates an exterior of a docking station of a cleaner according to an embodiment of the disclosure;
FIG. 13 is a side cross-sectional view of a cleaner coupled to a docking station according to an embodiment of the disclosure;
FIG. 14 is a control block diagram of a cleaner according to an embodiment of the disclosure;
FIG. 15 illustrates a control block diagram of a docking station of a cleaner according to an embodiment of the disclosure;
FIG. 16 is a flowchart illustrating a procedure for a cleaner to output guidance information according to an embodiment of the disclosure;
FIG. 17 illustrates a procedure in which a cleaner receives information about a non-cleaned zone according to an embodiment of the disclosure;
FIG. 18 illustrates a procedure in which a cleaner receives information about a non-cleaned zone according to an embodiment of the disclosure;
FIG. 19 illustrates a procedure in which a cleaner receives information about a non-cleaned zone according to an embodiment of the disclosure;
FIG. 20 illustrates a procedure in which a cleaner receives information about a non-cleaned zone according to an embodiment of the disclosure;
FIG. 21 illustrates a procedure in which a cleaner receives information about a non-cleaned zone according to an embodiment of the disclosure;
FIG. 22 illustrates an occasion when a cleaner outputs guidance information based on a certain condition according to an embodiment of the disclosure;
FIG. 23 illustrates an occasion when a cleaner outputs guidance information based on a certain condition according to an embodiment of the disclosure;
FIG. 24 illustrates an occasion when a cleaner outputs guidance information based on a certain condition according to an embodiment of the disclosure;
FIG. 25 illustrates guidance information output by a cleaner according to an embodiment of the disclosure;
FIG. 26 illustrates a screen output on a user equipment when there is a non-cleaned zone according to an embodiment of the disclosure;
FIG. 27 is a flowchart illustrating a procedure for a cleaner to output guidance information according to an embodiment of the disclosure;
FIG. 28 illustrates a screen for initial settings for identifying a location of a cleaner according to an embodiment of the disclosure;
FIG. 29 illustrates a screen for initial settings for identifying a location of a cleaner according to an embodiment of the disclosure;
FIG. 30 illustrates guidance information output by a cleaner according to an embodiment of the disclosure;
FIG. 31 illustrates guidance information output by a cleaner according to an embodiment of the disclosure;
FIG. 32 illustrates guidance information output by a cleaner according to an embodiment of the disclosure;
FIG. 33 is a flowchart illustrating a procedure for updating information about a non-cleaned zone based on a location of a cleaner according to an embodiment of the disclosure; and
FIG. 34 illustrates updating of information about a non-cleaned zone based on a location of a cleaner according to an embodiment of the disclosure.

### [MODES OF THE INVENTION]

Embodiments and features as described and illustrated in the disclosure are merely examples, and there may be various modifications replacing the embodiments and drawings at the time of filing this application.

The terminology used herein is for the purpose of describing particular embodiments only and is not intended to limit the disclosure.

For example, the singular forms "a", "an" and "the" as herein used are intended to include the plural forms as well, unless the context clearly indicates otherwise.

Throughout the specification, "A or B", "at least one of A and B", "at least one of A or B", "A, B or C", "at least one of A, B and C", and "at least one of A, B, or C" may each include any one or all the possible combinations of A, B and C. For example, the "at least one of A or B" may include "A", "B", or "A and B". The "at least one of A and B" may include "A", "B", or "A and B". In another example, the "at least one of A, B or C" may include "A", "B", C", "A and B", "B and C", "A and C" or "A, B and C". The "at least one of A, B and C" may include "A", "B", C", "A and B", "B and C", "A and C" or "A, B and C".

Throughout the specification, the expression "and/or" may be interpreted to include a combination or any of associated elements. For example, an expression "A, B and/or C" may include "A", "B", C", "A and B", "B and C", "A and C" or "A, B and C".

Terms like "first", "second", etc., may be simply used to distinguish an element from another, without limiting the elements in a certain sense (e.g., in terms of importance or order).

When an element is mentioned as being "coupled" or "connected" to another element with or without an adverb "functionally" or "operatively", it means that the element may be connected to the other element directly (e.g., wiredly), wirelessly, or through a third element.

It will be further understood that the terms "comprise" and/or "comprising," when used in this specification, specify the presence of stated features, integers, steps, operations, elements, parts or combinations thereof, but do not preclude the possible presence or addition of one or more other features, integers, steps, operations, elements, components, and/or groups thereof.

When an element is mentioned as being "connected to", "coupled to", "supported on" or "contacting" another element, it includes not only a case that the elements are directly connected to, coupled to, supported on or contact each other but also a case that the elements are connected to, coupled to, supported on or contact each other through a third element.

Throughout the specification, when an element is mentioned as being located "on" another element, it implies not only that the element is abut on the other element but also that a third element exists between the two elements.

Furthermore, the terms, such as "~ part", "~ block", "~ member", "~ module", etc., may refer to a unit of handling at least one function or operation. For example, the terms may refer to at least one process handled by hardware such as a field-programmable gate array (FPGA)/application specific integrated circuit (ASIC), etc., software stored in a memory, or at least one processor.

Reference numerals used for method steps are just used to identify the respective steps, but not to limit an order of the steps. Thus, unless the context clearly dictates otherwise, the written order may also be practiced otherwise.

Reference will now be made in detail to embodiments of the disclosure, which are illustrated in the accompanying drawings.

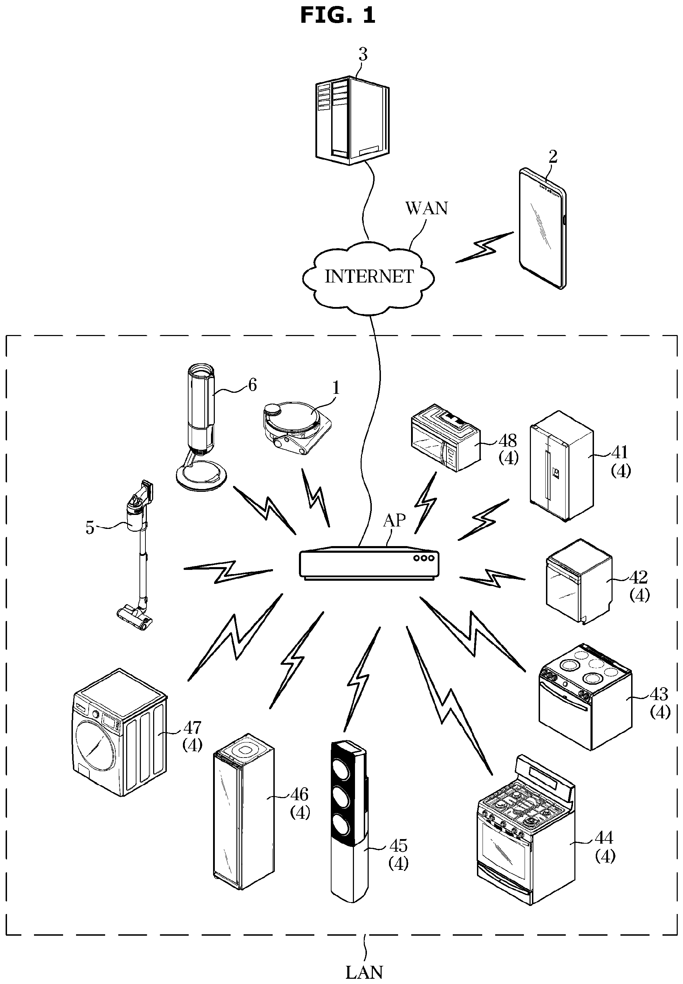

FIG. 1 illustrates a network system including a cleaner according to an embodiment of the disclosure.

Referring to FIG. 1, the network system may include a robot cleaner 1, a user equipment 2, a server 3, home appliances 4, a cleaner 5 and/or a docking station 6 of the cleaner 5.

The robot cleaner 1 may include a communication module for communicating with the user equipment 2, the home appliances 4 and/or the docking station 6, a user interface for receiving user inputs or outputting information for the user, at least one processor for controlling operation of the robot cleaner 1, and memory for storing a program for controlling the operation of the robot cleaner 1.

The home appliances 4 may include various types of electronic products. For example, the home appliances 4 may include at least one of a refrigerator 41, a dish washer 42, an electric range 43, an electric oven 44, a communicator 45, a garment care device 46, a clothing treatment device (e.g., a washing machine or a dryer) 47, or a microwave oven 48. The aforementioned home appliances are merely examples, and other various types of electronic products, such as televisions in addition to the aforementioned home appliance products may also be included in the home appliances 4.

The cleaner 5 and/or the docking station 6 may correspond to an example of the home appliances 4, but for convenience of explanation, the cleaner 5 and/or the docking station 6 of the cleaner 5 will be described separately from the home appliances 4. It is obvious that descriptions of the home appliances 4 are equally applied to the cleaner 5 and/or the docking station 6.

The server 3 may include a communication module for communicating with the robot cleaner 1, another server, the user equipment 2, the home appliances 4, the cleaner 5 and/or the docking station 6. The server 3 may include at least one processor for processing data received from the robot cleaner 1, the other server, the user equipment 2, the home appliances 4, the cleaner 5 and/or the docking station 6, and memory for storing a program for processing data or the processed data. The server 3 may be implemented with various computing devices, such as a workstation, a cloud, a data drive, a data station, or the like. The server 3 may be implemented with one or more servers physically or logically classified based on function, sub-configuration of the function or data, and may transmit or receive data through inter-server communication and process the data.

The server 3 may store and/or manage a user account, register the robot cleaner 1, the user equipment 2, the home appliances 4, the cleaner 5 and/or the docking station 6 by associating them with the user account, and perform a function of managing or controlling the registered robot cleaner 1, the user equipment 2, the home appliances 4, the cleaner 5 and/or the docking station 6. For example, the user may access the server 3 through the user equipment 2 to create a user account. The user account may be identified by an identity (ID) and a password created by the user. The user may access the server 3 through the user equipment 2 to manage the user account. The server 3 may register the robot cleaner 1, the home appliances 4, the cleaner 5 and/or the docking station 6 with the user account, according to a set procedure. For example, the server 3 may connect ID information (e.g., a serial number, a media access control (MAC) address, or the like) of the robot cleaner 1 to the user account to register, manage and control the robot cleaner 1. Similarly, the server 3 may register and control the home appliances 4, the cleaner 5 and/or the docking station 6 with the user account.

In various embodiments of the disclosure, the server 3 may be provided in the plural.

For example, the server 3 may include a first server and a second server. The first server may create and/or manage user account information, and register and/or manage information about the robot cleaner 1, the home appliances 4, the cleaner 5 and/or the docking station 6 with the user account information. The second server may receive the registered information of the robot cleaner 1, the home appliances 4, the cleaner 5 and/or the docking station 6 from the first server to control the robot cleaner 1, the home appliances 4, the cleaner 5 and/or the docking station 6.

In another example, the second server may perform a function of managing the robot cleaner 1, the home appliances 4, the cleaner 5 and/or the docking station 6 registered in the first server on behalf of the first server.

The number of the servers 3 is not limited thereto, and the servers 3 may include a plurality of servers for performing the same and/or different operations.

The user equipment 2 may include a communication module for communicating with the robot cleaner 1, the server 3, the home appliances 4, the cleaner 5 and/or the docking station 6. The user equipment 2 may include a user interface for receiving user inputs or outputting information for the user. The user equipment 2 may include at least one processor for controlling operation of the user equipment 2 and memory for storing a program for controlling the operation of the user equipment 2.

The user equipment 2 may be carried by the user or placed at the user's home or office. The user equipment 2 may include a personal computer, a terminal, a mobile phone, a smart phone, a handheld device, a wearable device, a display device, or the like, without being limited thereto.

A program, i.e., an application, for controlling the robot cleaner 1, the home appliances 4, the cleaner 5 and/or the docking station 6 may be stored in the memory of the user equipment 2. The application may be sold in a state of being installed in the user equipment 2, or may be downloaded from an external server to be installed.

The user may access the server 3 and create a user account by running the application installed in the user equipment 2, and register the robot cleaner 1, the home appliances 4, the cleaner 5 and/or the docking station 6 in the server 3 by communicating with the server 3 based on the login user account.

For example, when the robot cleaner 1 is operated to access the server 3 according to a procedure guided in the application installed in the user equipment 2, the server 3 may sign up the robot cleaner 1 with the user account by registering the ID information (e.g., a serial number or a MAC address) of the robot cleaner 1 with the user account. The home appliances 4, the cleaner 5 and/or the docking station 6 may be registered with the user account in a similar manner. It is obvious that other information than the serial number or MAC address of the device to identify the device may be used for the information required to register the device, such as the robot cleaner 1, the home appliances 4, the cleaner 5 and/or the docking station 6 with the user account.

The user may use the application installed in the user equipment 2 to control the robot cleaner 1, the home appliances 4, the cleaner 5 and/or the docking station 6. For example, when the user signs up with the user account in the application installed in the user equipment 2, the robot cleaner 1, the home appliances 4, the cleaner 5 and/or the docking station 6 registered with the user account may show up. When a control command for the robot cleaner 1, the home appliances 4, the cleaner 5 and/or the docking station 6 is input to the user equipment 2, the user equipment 2 may forward the control command to the robot cleaner 1, the home appliances 4, the cleaner 5 and/or the docking station 6 through the server 3.

In another example, when the server 3 is provided in the plural and a user account is linked to ID information of the device in the first server, the linkage information may be registered in the application of the user equipment 2. Afterward, when logging in to the user account in the application of the user equipment 2, the second server may communicate with the user equipment 2 and control the robot cleaner 1, the home appliances 4, the cleaner 5 and/or the docking station 6 by receiving control information of the robot cleaner 1, the home appliances 4, the cleaner 5 and/or the docking station 6 from the user equipment 2. The control information created in the robot cleaner 1, the home appliances 4, the cleaner 5 and/or the docking station 6 and communication information between the devices may be stored in the second server and transmitted to the user equipment 2 as well.

The user equipment 2 may receive various information from the robot cleaner 1, the home appliances 4, the cleaner 5 and/or the docking station 6 registered with the user account directly or through the server 3.

A network may include both a wired network and a wireless network. The wired network may include a cable network or a telephone network, and the wireless network may include any network that transmits or receives signals in radio waves. The wired network and the wireless network may be connected to each other.

The network may include a wide area network (WAN), such as the Internet, a local area network (LAN) formed around an access point (AP), a short-range wireless network without an AP. The short-range wireless network may include Bluetooth (institute of electrical and electronics engineers (IEEE) 802.15.1), Zigbee (IEEE 802.15.4), wireless fidelity (Wi-Fi) direct, near field communication (NFC), Z-wave, or the like, without being limited thereto.

The AP may connect the robot cleaner 1, the user equipment 2, the home appliances 4, the cleaner 5 and/or the docking station 6 to a WAN connected to the server 3. The robot cleaner 1, the user equipment 2, the home appliances 4, the cleaner 5 and/or the docking station 6 may be connected to the server 3 over the WAN.

The AP may use wireless communication, such as Wi-Fi (IEEE 802.11), Bluetooth (IEEE 802.15.1), Zigbee (IEEE 802.15.4), or the like, to communicate with the robot cleaner 1, the user equipment 2, the home appliances 4, the cleaner 5 and/or the docking station 6, and use wired communication to access the WAN, but the wireless communication schemes of the AP are not limited thereto.

In various embodiments of the disclosure, the robot cleaner 1 may be directly connected to the user equipment 2, the server 3, the home appliances 4, the cleaner 5 and/or the docking station 6 without using the AP.

In various embodiments of the disclosure, the cleaner 5 may be directly connected to the user equipment 2, the server 3, the home appliances 4, the robot cleaner 1 and/or the docking station 6 without using the AP.

The robot cleaner 1 may be connected to the user equipment 2, the server 3, the home appliances 4, the cleaner 5 and/or the docking station 6 over a long-range wireless network or a short-range wireless network.

For example, the robot cleaner 1 may be connected to the user equipment 2, the home appliances 4, the cleaner 5 and/or the docking station 6 over a short-range wireless network (e.g., Wi-Fi direct or Bluetooth). In another example, the robot cleaner 1 may use the long-range wireless network (e.g., a cellular communication module) to be connected to the user equipment 2, the server 3, the home appliances 4, the cleaner 5 and/or the docking station 6 over the WAN.

The cleaner 5 may be connected to the user equipment 2, the server 3, the home appliances 4, the robot cleaner 1 and/or the docking station 6 over a long-range wireless network or a short-range wireless network.

For example, the cleaner 5 may be connected to the user equipment 2, the home appliances 4, the robot cleaner 1 and/or the docking station 6 over a short-range network (e.g., Wi-Fi direct or Bluetooth). In another example, the cleaner 5 may use the long-range wireless network (e.g., a cellular communication module) to be connected to the user equipment 2, the server 3, the home appliances 4, the robot cleaner 1 and/or the docking station 6 over the WAN.

In various embodiments of the disclosure, the docking station 6 may connect to the WAN by using wired communication, and connect to the user equipment 2, the server 3, the home appliances 4, the robot cleaner 1 and/or the cleaner 5 over the WAN. When the docking station 6 is able to access the WAN through the wired communication, the docking station 6 may operate as an AP.

The robot cleaner 1 may transmit information about an operation or state to the user equipment 2, the server 3, the home appliances 4, the cleaner 5 and/or the docking station 6 over the network. For example, the robot cleaner 1 may transmit the information about the operation or the state to the user equipment 2, the server 3, the home appliances 4, the cleaner 5 and/or the docking station 6 when receiving a request from the server 3, when a particular event occurs in the robot cleaner 1, periodically or in real time.

The cleaner 5 may transmit information about an operation or state to the user equipment 2, the server 3, the home appliances 4, the robot cleaner 1 and/or the docking station 6 over the network. For example, the cleaner 5 may transmit the information about the operation or the state to the user equipment 2, the server 3, the home appliances 4, the robot cleaner 1 and/or the docking station 6 when receiving a request from the server 3, when a particular event occurs in the cleaner 5, periodically or in real time.

The server 3 may update stored information about an operation or state of the robot cleaner 1, the home appliances 4, the cleaner 5 and/or the docking station 6 when receiving information about an operation or state of the robot cleaner 1, the home appliances 4, the cleaner 5 and/or the docking station 6, and transmit the updated information about the operation and/or state of the robot cleaner 1, the home appliances 4, the cleaner 5 and/or the docking station 6 to the user equipment 2 over the network. The updating of the information may include various operations to change the existing information, such as adding new information to the existing information, replacing the existing information with the new information, or the like.

The robot cleaner 1 may obtain various information from the user equipment 2, the server 3, the home appliances 4, the cleaner 5 and/or the docking station 6 and provide the obtained information to the user. For example, the robot cleaner 1 may obtain information relating to a function of the robot cleaner 1 or various environmental information (e.g., weather, temperature, humidity, or the like) from the server 3 and output the obtained information through the user interface.

The cleaner 5 may obtain various information from the user equipment 2, the server 3, the home appliances 4, the robot cleaner 1 and/or the docking station 6 and provide the obtained information to the user. For example, the cleaner 5 may obtain information about a function of the cleaner 5 or various environmental information (e.g., weather, temperature, humidity, non-cleaned zone, or the like) from the server 3 and output the obtained information through the user interface.

The robot cleaner 1, the home appliances 4, the cleaner 5 and/or the docking station 6 may operate according to a control command received from the user equipment 2 and/or the server 3. For example, when the robot cleaner 1 has won prior approval of the user to operate according to a control command of the server 3 even without a user input through the user equipment 2, the robot cleaner 1 may operate according to the control command received from the server 3. The control command received from the server 3 may include a control command input by the user through the user equipment 2, a control command based on a preset condition or the like, without being limited thereto.

In various embodiments of the disclosure, the robot cleaner 1, the home appliances 4, the cleaner 5 and/or the docking station 6 may operate according to a control command received from one another. For example, the cleaner 5 may operate according to a control command received from the robot cleaner 1, the user equipment 2, the home appliances 4 and/or the docking station 6 even without a user input. The control command received from the robot cleaner 1, the user equipment 2, the home appliances 4 and/or the docking station 6 may include a control command input by the user through the robot cleaner 1, the user equipment 2, the home appliances 4 and/or the docking station 6, a control command based on a preset condition, or the like, without being limited thereto.

The user equipment 2 may transmit information about the user to the robot cleaner 1, the server 3, the home appliances 4, the cleaner 5 and/or the docking station 6 through the communication module. For example, the user equipment 2 may transmit information about a location of the user, a physical condition of the user, a preference of the user, a schedule of the user, or the like, to the server 3. The user equipment 2 may transmit the information about the user to the server 3 according to prior approval of the user.

The robot cleaner 1, the user equipment 2, the server 3, the home appliances 4, the cleaner 5 and/or the docking station 6 may use an artificial intelligence (AI) technology to determine a control command. For example, the server 3 may use the AI technology to process the information about the operation or state of the robot cleaner 1, the home appliances 4, the cleaner 5 and/or the docking station 6 and the information about the user of the user equipment 2, and based on a result of the processing, transmit the result or a control command to the robot cleaner 1, the user equipment 2, home appliances 4, the cleaner 5 and/or the docking station 6.

The robot cleaner 1 may include a robot capable of autonomous traveling. The robot cleaner 1 may have a function to clean indoor space autonomously.

The cleaner 5 may include a manual cleaner incapable of autonomous traveling. For example, the cleaner 5 may be a wireless handheld cleaner or a wireless stick-type cleaner.

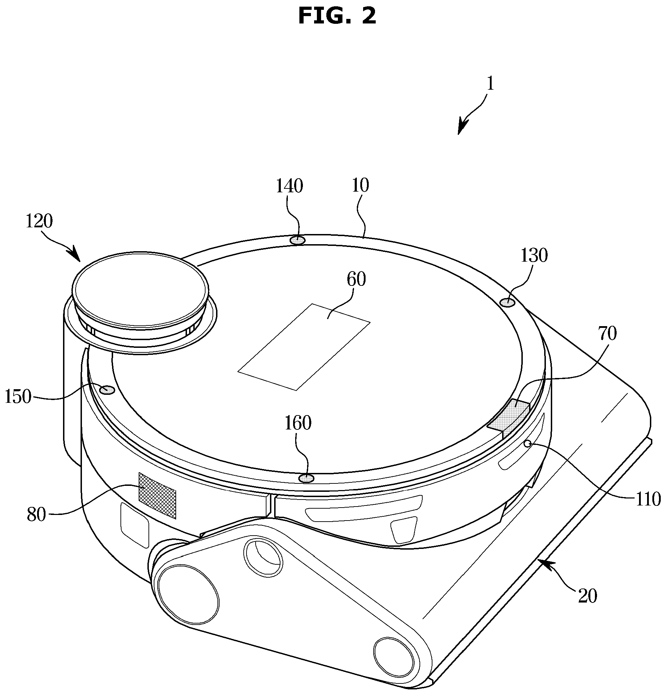

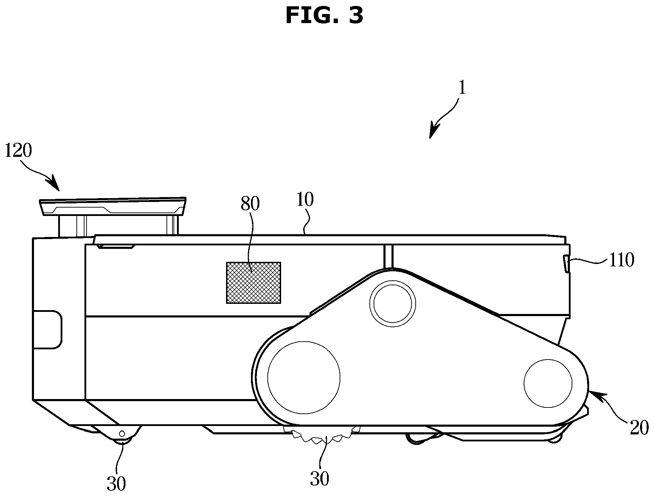

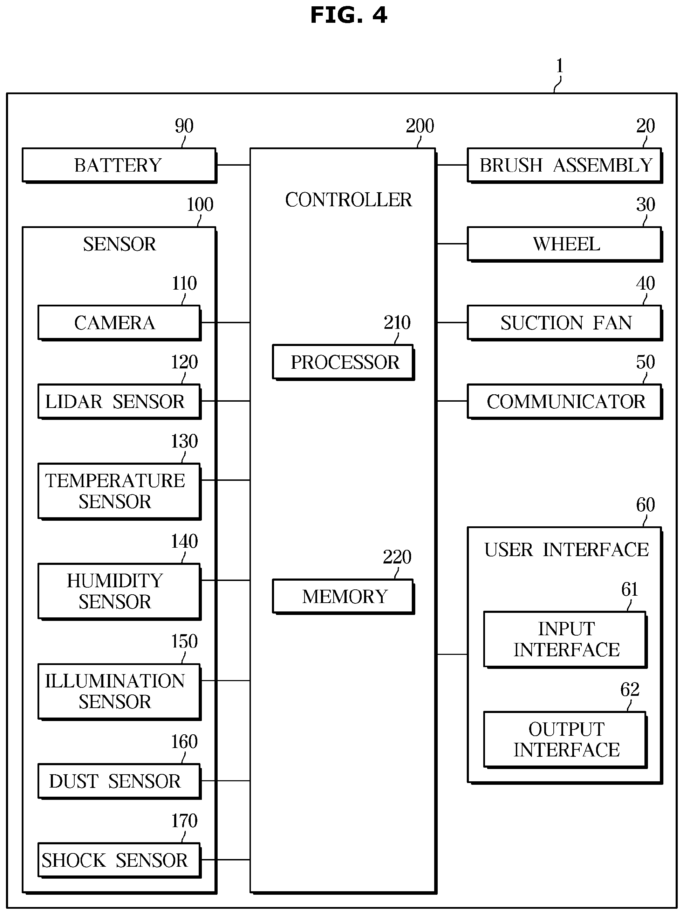

FIG. 2 illustrates an exterior of a robot cleaner according to an embodiment of the disclosure. FIG. 3 illustrates a side of a robot cleaner shown in FIG. 2 according to an embodiment of the disclosure. FIG. 4 illustrates a control block diagram of a robot cleaner according to an embodiment of the disclosure.

Referring to FIGS. 2 and 3, the terms "forward (or front)", "rearward (or back)", "upward (or up), "downward (or down)", "left" and "right" are defined with respect to a direction in which the robot cleaner 1 moves forward, but the terms may not restrict the shapes and positions of the respective components. Furthermore, an expression that indicates a direction is used to clearly understand the disclosure, and the direction may be defined otherwise.

Referring to FIGS. 2, 3, and 4, the robot cleaner 1 may include a main body 10, and a wheel 30 arranged to be rotatable around an axis parallel to the ground to move the main body 10. The main body 10 may include a case that defines an external appearance. There may be a plurality of wheels 30. For example, there may be two or more wheels 30 arranged underneath the main body 10. The wheel 30 may include a wheel motor, and may rotate according to rotational force produced by the wheel motor.

A brush assembly 20 may be arranged on the front of the main body 10. A brush may scatter debris present in a traveling route of the main body 10. The brush is arranged at a suction port formed on the bottom surface of the main body 10, and scatters the debris to the inside of the suction port while rotating around the rotation axis perpendicular to the forward direction of the main body 10. A suction fan 40 for producing suction force to draw in the debris and a dust container for storing the debris may be arranged in the main body 10.

A user interface 60 may be arranged on the top surface of the main body 10. Although the user interface 60 is illustrated as being arranged on the top surface of the main body 10, it is not limited thereto. The user interface 60 may obtain a user input. The user interface 60 may provide various information about operations of the robot cleaner 1. The user interface 60 may include at least one input interface 61 and at least one output interface 62.

In various embodiments of the disclosure, the input interface 61 may convert sensory information received from the user to an electric signal.

The at least one output interface 62 may send various information relating to the operation of the robot cleaner 1 to the user by outputting the sensory information.

For example, the at least one output interface 62 may send information collected by the robot cleaner 1 to the user. The information collected by the robot cleaner 1 may be output as sensory information, such as a screen, an indicator, voice, or the like. The at least one output interface 62 may include, for example, a display (e.g., a liquid crystal display (LCD) panel, a light emitting diode (LED) panel, a light emitting diode (LED) module) and/or a speaker 80.

The sensory information may include visual information (e.g., a screen, an indicator, or the like), auditory information (e.g., sound) and/or tactile information (e.g., a touch, vibration, or the like).

The robot cleaner 1 may include a microphone 70 for detecting external sound. The microphone 70 may detect a voice of the user. The robot cleaner 1 may include the speaker 80 for outputting various effective sounds and voices related to operation of the robot cleaner 1. The microphone 70 and the speaker 80 may be arranged in the main body 10, but positions of the microphone 70 and the speaker 80 are not limited thereto.

The robot cleaner 1 may include various sensors 100. For example, the robot cleaner 1 may include at least one of a camera 110, a light detection and ranging (Lidar) sensor 120, a temperature sensor 130, a humidity sensor 140, an illumination sensor 150 and a dust sensor 160. The sensors may be arranged in the main body 10. At least some of the sensors may be arranged to be exposed to the outside of the main body 10.

The camera 110 may be arranged on the front of the main body 10. The camera 110 may generate an image with a field of view (FOV) toward the front of the main body 10. The location of the camera 110 is not limited to the front of the main body 10. The camera 110 may be arranged in various positions at which to capture surroundings of the robot cleaner 1. The camera 110 may be arranged on a side and/or back of the main body 10.

The camera 110 may include an image sensor for generating image data by collecting incident light from outside. For example, the camera 110 may include at least one of a red-green-blue (RGB) camera for generating a color image by collecting visible rays and an infrared camera for generating an infrared image. The camera 110 may include a binocular camera (stereo camera). The binocular camera may obtain information about depth to an object by using binocular disparity. The image data obtained by the camera 110 may be transmitted to a controller 200 of the robot cleaner 1. The controller 200 may identify an external object by processing the image data.

The Lidar sensor 120 may emit light (pulse laser) to the outside, and receive light of a preset direction among rays reflecting from the external object. The Lidar sensor 120 is able to rotate 360 degrees clockwise or counterclockwise. As the Lidar sensor 120 may emit light and receive reflected light at 360 degrees, the robot cleaner 1 may use the Lidar sensor 120 to detect external objects from all directions. In various embodiments of the disclosure, the Lidar sensor 120 may be arranged on a rear cover 12 of the main body 10, but the position of the Lidar sensor 120 is not limited thereto.

Lidar data generated by the Lidar sensor 120 may be transmitted to the controller 200 of the robot cleaner 1. The Lidar data may include light propagation direction information and information about a distance to the external object. The controller 200 may process the Lidar data to perform three-dimensional (3D) modeling of the indoor space. The controller 200 may process the Lidar data to obtain 3D data of an external object.

The temperature sensor 130 may obtain temperature data of the indoor space in which the robot cleaner 1 travels. The temperature sensor 130 may transmit an electric signal corresponding to the obtained temperature data to the controller 200. The humidity sensor 140 may obtain humidity data of the indoor space in which the robot cleaner 1 travels. The humidity sensor 140 may transmit an electrical signal corresponding to the obtained humidity data to the controller 200.

The illumination sensor 150 may obtain illumination data of the indoor space in which the robot cleaner 1 travels. The illumination sensor 150 may detect solar light that enters the indoor space. The illumination sensor 150 may also detect solar light that reflects from an object in the indoor space. The illumination sensor 150 may also detect lamp light emitted from a lamp arranged in the indoor space. The illumination sensor 150 may transmit an electrical signal corresponding to the obtained illumination data to the controller 200.

The dust sensor 160 may obtain dust data of the indoor space in which the robot cleaner 1 travels. The dust data may include a concentration of dust in the air. The dust data may correspond to air quality data.

In addition to what are illustrated above, various sensors may be arranged in the robot cleaner 1. For example, the robot cleaner 1 may include various sensors, such as a gas sensor for detecting a harmful gas in the air, an air flow meter for measuring an airflow in the indoor space, a shock sensor 170 for detecting shocks with external objects, a gyro sensor for detecting motion of the robot cleaner 1, an inertial measurement unit (IMU) for detecting acceleration, speed and direction of the robot cleaner 1, a time-of-flight (ToF) sensor for measuring a distance to an external object, a radio frequency (RF) sensor, an ultrasound sensor and a radar sensor.

The controller 200 may control the components of the robot cleaner 1. The controller 200 may include a processor 210 and memory 220. The processor 210 may include logic circuits and operation circuits in hardware. The processor 210 may control the electrically connected components of the robot cleaner 1 based on a program, instructions and/or data stored in the memory 220 for an operation of the robot cleaner 1. The controller 200 may be implemented with a control circuit including circuit elements, such as a condenser, an inductor and a resistor. The processor 210 and the memory 220 may be implemented in separate chips or in a single chip. Furthermore, the controller 200 may include a plurality of processors and a plurality of memories.

The memory 220 may store the program, application and/or data for the operation of the robot cleaner 1 and store data created by the processor 210. The memory 220 may include non-volatile memory, such as read only memory (ROM) and flash memory for storing the data for a long time. The memory 220 may include volatile memory for temporarily storing data, such as static random-access memory (SRAM) and dynamic random access memory (DRAM).

The brush assembly 20 may include a brush and a brush motor. Rotational force generated by the brush motor may rotate the brush. Rotation speed of the brush may be controlled by controlling rotation speed of the brush motor. The degree of scattering of debris in a travel route of the robot cleaner 1 may vary depending on the rotation speed of the brush.

The wheel 30 may move the main body 10. The wheel 30 may include a wheel motor, and may rotate according to the rotational force produced by the wheel motor. The wheel 30 may be provided in the plural, and each of the plurality of wheels may be controlled separately. As the direction in which the plurality of wheels rotate is changed, a direction in which the robot cleaner 1 travels may be changed. Furthermore, the travel speed of the robot cleaner 1 may be controlled by controlling rotation speed of each of the plurality of wheels.

The suction fan 40 may draw in the debris scattered by the brush assembly 20 to be moved into the dust container. The suction fan 40 may rotate according to the rotational force of a suction motor, and the rotation of the suction fan 40 may produce suction force to draw in the debris. The suction force may be controlled by controlling the rotation speed of the suction fan 40.

A communicator 50 may perform connection with at least one of the user equipment 2, the server 3, the home appliances 4, the controller 5 and the docking station 6 over the network. The controller 200 may obtain various information, various signals and/or various data from the user equipment 2, the server 3, the home appliances 4, the cleaner 5 and the docking station 6 through the communicator 50. For example, the communicator 50 may receive a remote-control signal from the user equipment 2. The controller 200 may obtain an AI model used to process various data from the server 3 through the communicator 50.

The controller 200 may transmit various information, various signals and/or various data to the user equipment 2, the server 3, the home appliances 4, the cleaner 5 and the docking station 6 through the communicator 50. For example, the controller 200 may transmit cleaning report information through the communicator 50 based on completion of cleaning of a predefined space.

The cleaning report information may include various information relating to cleaning of the predefined space, such as information about a non-cleaned zone and/or information about a cleaned zone.

The non-cleaned zone may refer to a zone for which cleaning is not performed even after cleaning of the predefined space is completed according to a predefined cleaning schedule. The non-cleaned zone may refer to a zone belonging to the predefined space requiring cleaning but to which the robot cleaner 1 has failed to move. For example, the non-cleaned zone may include a zone into which the robot cleaner 1 has failed to enter due to an intervening factor, such as an obstacle. The non-cleaned zone may refer to a zone that has not been cleaned by the robot cleaner according to the predefined cleaning schedule. The non-cleaned zone may be a zone determined as impossible to be reached by the robot cleaner although corresponding to a zone to be cleaned according to the predefined schedule.

The communicator 50 may include various communication circuits. The communicator 50 may include a wireless communication circuit and/or a wired communication circuit. The wireless communication circuit may support various wireless communication, such as a wireless local area network (LAN), home RF, infrared communication, ultra-wide band (UWB) communication, Wi-Fi, Bluetooth, Zigbee and/or a long-range wireless network (e.g., cellular communication).

The user interface 60 may obtain a user input. The user interface 60 may provide various information about operations of the robot cleaner 1. The user interface 60 may include the input interface 61 and the output interface 62.

The input interface 61 may convert sensory information received from the user to an electric signal. The electric signal may correspond to a user input. The user input may include various commands. For example, the input interface 61 may obtain a power-on command, a power-off command, a start operation command, a stop operation command, or a charge command. The user input may be obtained from the user equipment 2. The input interface 61 may transmit an electrical signal (voltage or current) corresponding to the user input to the controller 200.

The input interface 61 may include at least one of various buttons and a dial to convert tactile information to an electric signal. For example, the input interface 61 may include at least one of a power button to power on or off the robot cleaner 1, a start/stop button to start or stop the cleaning operation, and a docking button to force the robot cleaner 1 to return to the charging station. The buttons may be provided as mechanical buttons or touch buttons. The input interface 61 may include the microphone 70 to convert auditory information to an electric signal. The microphone 70 may detect an external sound, such as a voice of the user. The microphone 70 may convert the user voice, which is an analog signal, into a data signal and transmit the data signal to the controller 200. The controller 200 may identify a command included in the user voice by analyzing the user voice, and control the operation of the robot cleaner 1 based on the identified command.

The output interface 62 may display information about an operation of the robot cleaner 1. The output interface 62 may display information input by the user or information to be provided for the user in various screens. The output interface 62 may display information regarding an operation of the robot cleaner 1 in at least one of an image or text. For example, the output interface 62 may output battery information. Furthermore, the output interface 62 may display a graphic user interface (GUI) that enables the robot cleaner 1 to be controlled. In other words, the output interface 62 may display a user interface element (UI element), such as an icon.

The output interface 62 may be implemented with various devices capable of outputting sensory information. For example, the output interface 62 may include a display for outputting visual information and/or the speaker 80 for outputting auditory information.

For example, the output interface 62 may include an LCD panel, an LED panel, an organic light emitting diode (OLED) panel, or a micro LED panel. The output interface 62 may include a touch display that serves as an input device as well.

The output interface 62 and the input interface 61 may be provided separately or in one device (e.g., the touch display).

The controller 200 may control operation of the robot cleaner 1 based on a command received through the input interface 61 and/or a command received from an external device (e.g., the user equipment 2, the server 3, the home appliance 4, the cleaner 5 and/or the docking station 6) through the communicator 50.

The controller 200 may output information obtained by the robot cleaner 1, through the output interface 62, or send the information to an external device through the communicator 50.

The speaker 80 may output information input by the user or information provided for the user in various sounds. For example, the controller 200 may control the speaker 80 to output various sounds of at least one of an operation state of the robot cleaner 1, an operation state of the home appliance 4, environmental information of the indoor space and/or information about a non-cleaned zone.

A battery 90 may supply power to various electronic components included in the robot cleaner 1. For example, the battery 90 may supply power to the motor for driving the wheel 30, the suction motor for driving the suction fan 40, the communicator 50, the user interface 60, the sensor 100 and/or the controller 200. The power supplied from the battery 90 may be transformed by the controller 200 and then supplied to the respective electronic components.

As described above, the sensor 100 may include an image sensor for obtaining image data with an FOV toward the outside of the main body 10, and a non-image sensor for obtaining data about a surrounding condition of the main body 10 and a motion of the cleaner 1. The image sensor may include the camera 110 and the Lidar sensor 120. The non-image sensor may include the temperature sensor 130, the humidity sensor 140, the illumination sensor 150, the dust sensor 160 and the shock sensor 170. Furthermore, the non-image sensor may include at least one of a gas sensor for detecting a harmful gas in the air, an airflow meter for measuring air volume in the indoor space, a wheel sensor for detecting rotation speed of the wheel 30, a gyro sensor for detecting a change in posture of the main body 10, or an IMU for detecting acceleration, speed and direction of the robot cleaner 1.

The controller 200 may use an AI model obtained from the memory 220 or the server 3 to identify an external object from at least one of the image data and the Lidar data and detect a feature of the external object. For example, the controller 200 may detect the size, shape, brightness, definition, transparency, position and/or color of the external object. Furthermore, the controller 200 may estimate a distance to the external object and height of the external object by using the depth information included in at least one of the image data and the Lidar data. The controller 200 may identify an obstacle in a travel route of the robot cleaner 1 by processing at least one of the image data and the Lidar data and control the wheel 30 to avoid the obstacle. The camera 110 and the Lidar sensor 120 are illustrated as a sensor for identifying an external object, but are not limited thereto. The external object may also be identified from data obtained using various sensors, such as an ultrasound sensor or a radar sensor.

In various embodiments of the disclosure, the controller 200 may obtain environmental data from anther environmental sensor installed in the indoor space. For example, at least one of the illumination sensor, the temperature sensor, the humidity sensor and the dust sensor may be installed on the ceiling, wall, windows, or the like, of the indoor space. The other environmental sensor installed in the indoor space may communicate with the robot cleaner 1.

Components of the robot cleaner 1 are not limited to what are illustrated in FIGS. 2 to 4. Some of the components illustrated in FIG. 4 may be omitted or other components may be further added to the robot cleaner 1. For example, the robot cleaner 1 may include at least one of the aforementioned sensors 110, 120, 130, 140, 150, 160 and 170 described as an example of the sensor 100, and further include an additional sensor.

For example, the robot cleaner 1 may include a light sensor using an LED instead of the Lidar sensor 120 that irradiates pulse laser. In another example, the robot cleaner 1 may include only the camera 110 without the Lidar sensor 120.

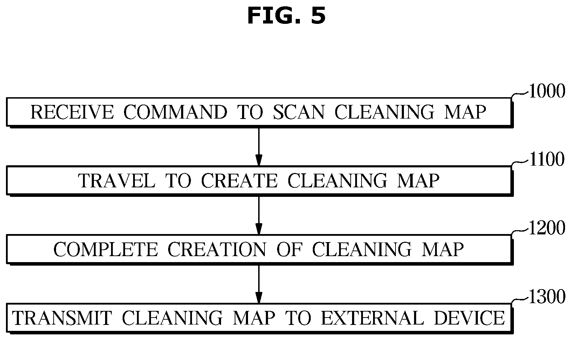

FIG. 5 is a flowchart illustrating a procedure in which a robot cleaner creates a cleaning map according to an embodiment of the disclosure.

Referring to FIG. 5, the controller 200 of the robot cleaner 1 may identify a plurality of zones in the indoor space based on data obtained from the sensor 100 while the robot cleaner 1 is traveling in the indoor space, and create a map (hereinafter, a cleaning map) of the indoor space including the plurality of zones. The controller 200 may create various types of maps of the plurality of zones in the indoor space based on various data obtained by the sensor 100.

For example, the controller 200 may create the cleaning map of the indoor space by using at least one of the image data and the Lidar data obtained while the robot cleaner 1 is traveling in the indoor space, and identify a location of the robot cleaner 1 in the indoor space. To create the cleaning map, a simultaneous localization and mapping (SLAM) algorithm may be used. The SLAM is an algorithm that is able to make a map of the space in which the robot cleaner 1 is traveling and simultaneously, estimate a location of the robot cleaner 1 in the map. The cleaning map may include structural information of the indoor space. The cleaning map may be stored in the memory 220. The controller 200 may update the cleaning map at preset intervals or whenever a changed indoor structure is detected.

Referring to FIG. 5, the robot cleaner 1 may receive a command to scan a cleaning map, in operation 1000. For example, the user may input the command to scan a cleaning map through the user equipment 2, and the command to scan a cleaning map may be received by the communicator 50 of the robot cleaner 1 via the server 3. In another example, the user may input the command to scan a cleaning map through the input interface 61. In another example, when the user inputs the command to scan a cleaning map to the user equipment 2, the command to scan a cleaning map may not pass through the server 3 but may be directly received by the communicator 50 of the robot cleaner 1. The direct communication may be performed through Wi-Fi direct, Bluetooth communication, or NFC communication that enables direct communication between devices.

The command to scan a cleaning map may be a command to request creation of a cleaning map of the indoor space from the robot cleaner 1.

The robot cleaner 1 may travel in the space to be cleaned to create the cleaning map based on reception of the command to scan a cleaning map, in operation 1100. In various embodiments of the disclosure, the robot cleaner 1 may travel in the space to be cleaned, autonomously and under the control of the user. The space to be cleaned may often be an indoor space, but may include an outdoor space, such as a balcony.

The controller 200 may control the wheel 30 to travel for obtaining data about the whole indoor space based on reception of the command to scan a cleaning map.

The robot cleaner 1 may create the cleaning map based on data obtained from the sensor 100 while traveling for creating the cleaning map.

When the robot cleaner 1 has obtained data about the whole indoor space and there is no more indoor space to be obtained, the robot cleaner 1 may complete creation of the cleaning map, in operation 1200. In various embodiments of the disclosure, the robot cleaner 1 may complete creation of a cleaning map of only an area in which the robot cleaner 1 has traveled among the indoor space, based on a stop traveling condition (e.g., battery discharge or reception of a user input to stop traveling) satisfied while creating the cleaning map.

The robot cleaner 1 may store the created cleaning map.

The robot cleaner 1 may transmit the complete cleaning map to an external device (e.g., the user equipment 2, the server 3, the home appliance 4, the cleaner 5 and/or the docking station 6), in operation 1300.

In various embodiments of the disclosure, the robot cleaner 1 may transmit the cleaning map to the server 3, and the server 3 may forward the cleaning map to another device (e.g., the user equipment 2, the home appliance 4, the cleaner 5 and/or the docking station 6).

After completing creation of the cleaning map, the robot cleaner 1 may clean the space to be cleaned corresponding to the cleaning map.

In another example, while creating a zoned cleaning map of the space to be cleaned, the robot cleaner 1 may perform cleaning for some zones allowed to be cleaned in the created cleaning map even when the creation of the cleaning map of all the indoor space to be cleaned has not been completed.

In various embodiments of the disclosure, the cleaning map may be sent to the robot cleaner 1 and/or the server 3 by the user uploading a drawing corresponding to the indoor space through the user equipment 2.

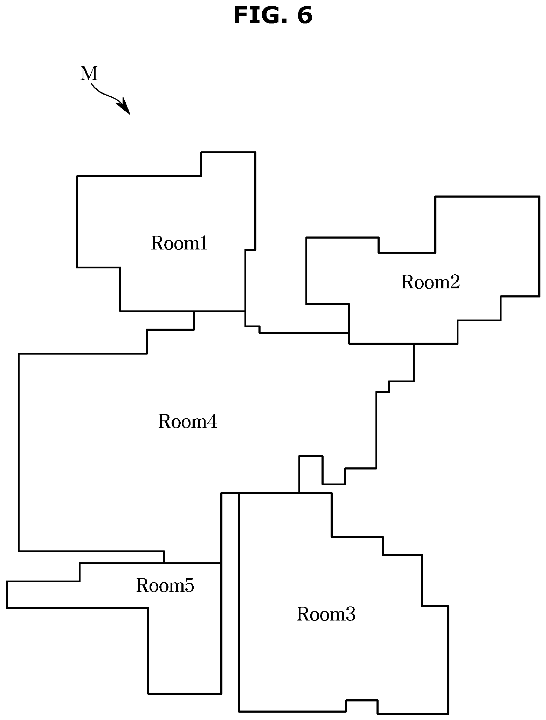

FIG. 6 illustrates a cleaning map according to an embodiment of the disclosure.

Referring to FIG. 6, an example of a cleaning map M may be seen.

As described above, the robot cleaner 1 may create a map of an indoor space while traveling in the indoor space. The robot cleaner 1 may create the cleaning map M including a plurality of zones in the indoor space by using at least one of image data and Lidar data obtained while traveling in the indoor space. In FIG. 6, illustrated is an indoor space divided into 5 rooms. The indoor space may be divided into at least one room (e.g., room 1, room 2, room 3, room 4 and room 5).

Each of the at least one room may be separated by at least one partition member (e.g., doors). The robot cleaner 1 may recognize an independent space that may be separated by at least one partition member as one room, and define different rooms as different target zones to be cleaned in the entire cleaning area. The robot cleaner 1 may recognize an independent space that may be separated by at least one partition member as one room, and define different rooms as different target zones to be cleaned in the entire cleaning area.

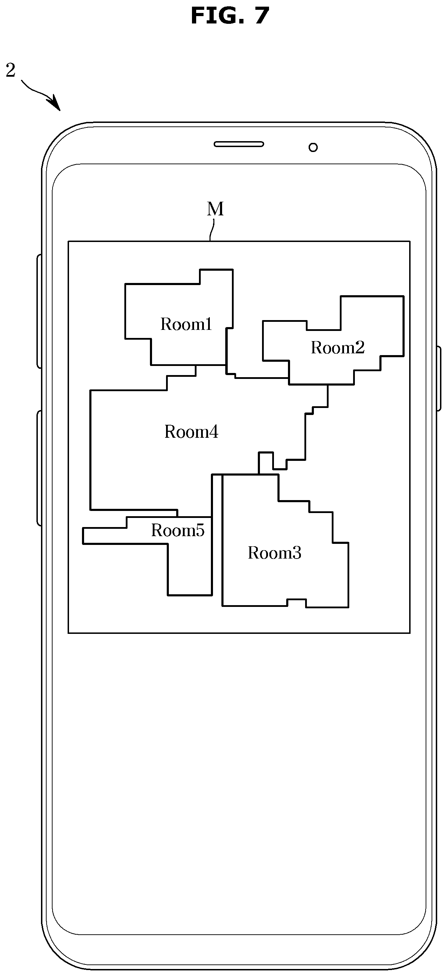

FIG. 7 illustrates an occasion when a cleaning map is output from a user equipment according to an embodiment of the disclosure.

Referring to FIG. 7, it may be seen that the cleaning map M is sent to the user equipment 2 and that the user equipment 2 displays the cleaning map M.

The user may set a cleaning schedule based on the cleaning map M displayed on the user equipment 2 or perform various settings, such as setting a name for each of the at least one room.

For example, the user may modify a name of room 1 to a 'study room', modify a name of room 2 to a 'main room', a name of room 3 to a 'son's room', a name of room 4 to a ' living room', and a name of room 5 to a 'storage'.

Furthermore, the user may set a cleaning schedule for each of the at least one room through the user equipment 2. For example, the user may set a cleaning schedule including a cleaning cycle, a cleaning sequence, a cleaning data and/or cleaning hour for each of the at least one room, and the set cleaning schedule may be stored in the server 3.

The cleaning schedule stored in the server 3 may be sent to the robot cleaner 1, and the robot cleaner 1 may perform cleaning according to the cleaning schedule set by the user. In another example, the cleaning schedule set in the user equipment 2 may be sent directly to the robot cleaner 1. In another example, the user may input a cleaning schedule directly through the user interface of the robot cleaner 1.

In various embodiments of the disclosure, the robot cleaner 1 may transmit cleaning report information to the server 3 after performing cleaning according to the cleaning schedule set by the user. The server 3 may forward the cleaning report information to the user equipment 2, the home appliances 4, the cleaner 5 and/or the docking station 6. In another example, the cleaning report information created in the robot cleaner 1 may be sent to the user equipment 2 directly from the robot cleaner 1.

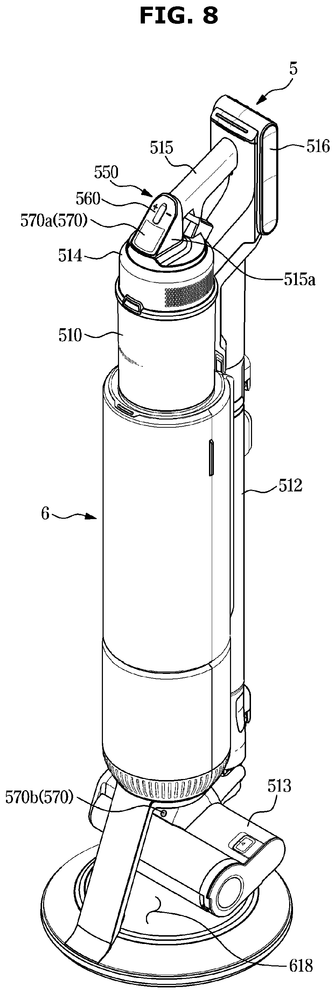

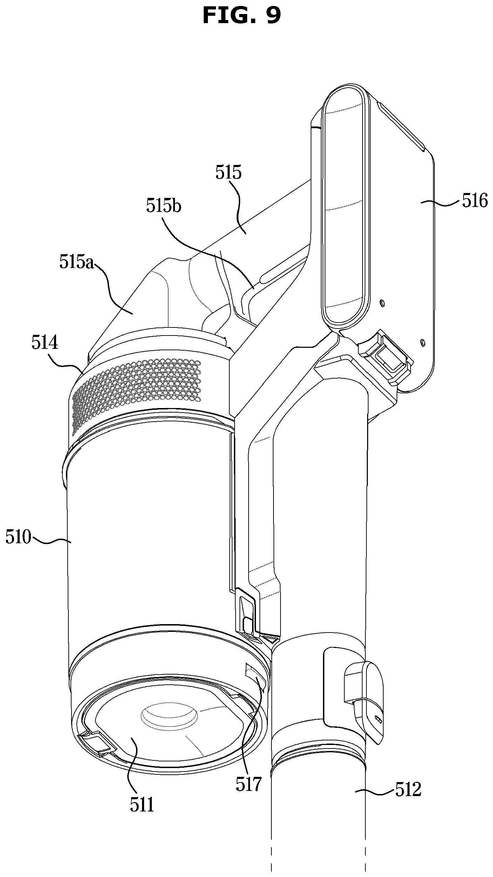

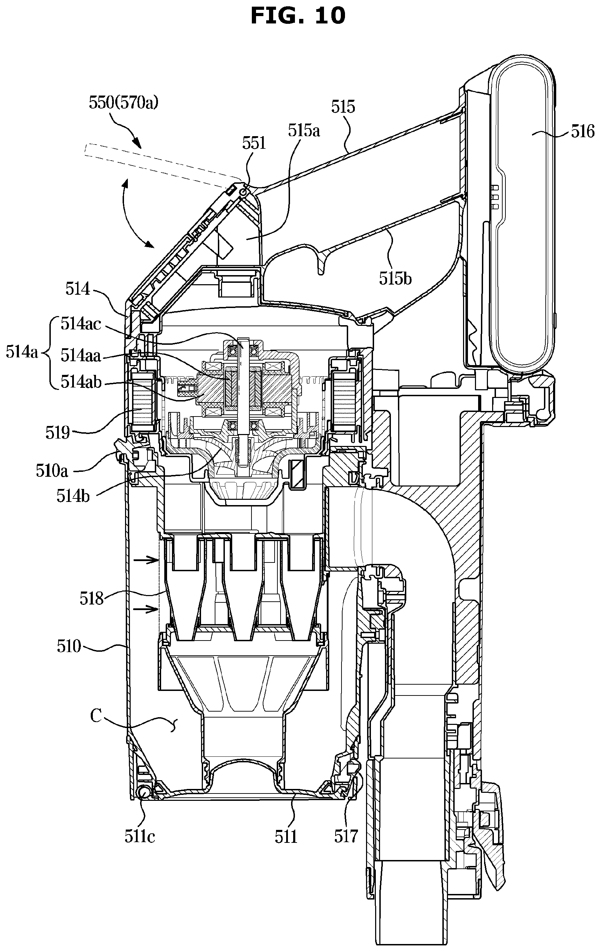

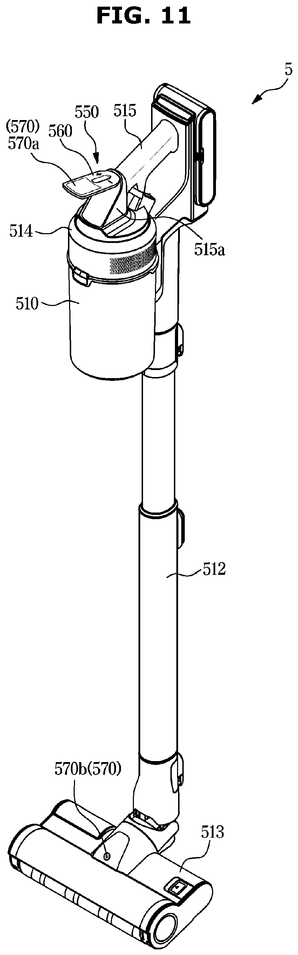

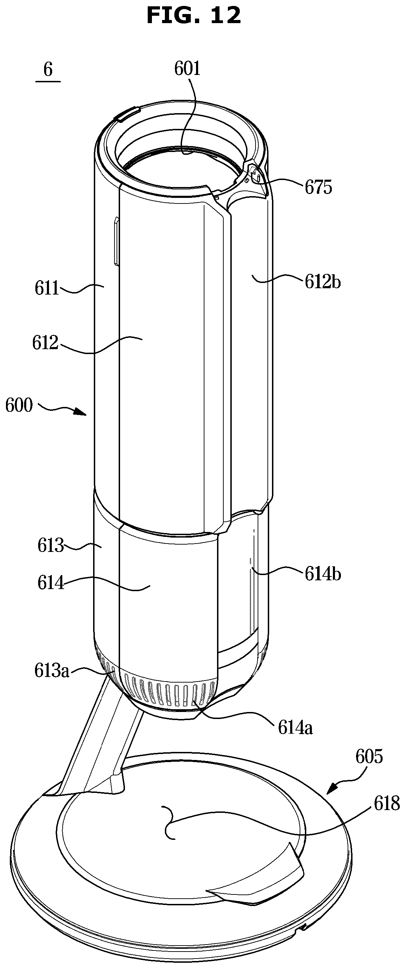

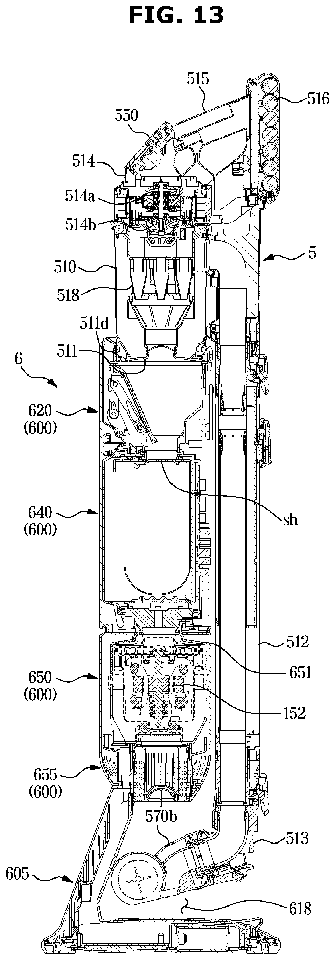

FIG. 8 illustrates a cleaner coupled to a docking station according to an embodiment of the disclosure. FIG. 9 is an enlarged view of a portion of a cleaner according to an embodiment of the disclosure. FIG. 10 is a side cross-sectional view of a portion of a cleaner according to an embodiment of the disclosure. FIG. 11 illustrates an exterior of a cleaner according to an embodiment of the disclosure. FIG. 12 illustrates an exterior of a docking station of a cleaner according to an embodiment of the disclosure. FIG. 13 is a side cross-sectional view of a cleaner coupled to a docking station, according to an embodiment of the disclosure.

Referring to FIGS. 8, 9, 10, 11, 12, and 13, the cleaner 5 may be docked on the docking station 6 provided for the cleaner 5 to be detachably mounted thereon. The cleaner 5 may be coupled to the docking station 6 by being settled in the docking station 6.

The cleaner 5 may include a cleaner body 514, and a dust container 510 provided to collect debris moved into the cleaner 5. The dust container 510 may be detachably coupled to the cleaner body 514.

The cleaner 5 may include a suction nozzle 513 provided to draw in debris, such as dust on a surface to be cleaned by suction force produced from the cleaner body 514.

The cleaner 5 may include a connection tube 512 arranged to connect between the suction nozzle 513 and the cleaner body 514.

The suction nozzle 513 may include a suction brush (not shown), and may closely contact the surface to be cleaned to draw in air and debris on the surface to be cleaned. The suction nozzle 513 may be rotationally coupled to the connection tube 512.

The connection tube 512 may be formed of a flexible hose or a pipe with certain rigidity. The connection tube 512 may deliver suction force produced from a cleaner suction device 514a and 514b to the suction nozzle 513, and lead debris, such as air and dust drawn in through the suction nozzle 513 to the cleaner body 514. The debris may be drawn in through the suction nozzle 513 and moved and collected into the dust container 510 through the cleaner body 514 along the connection tube 512.

The connection tube 512 may be detachably coupled to the cleaner body 514. The suction nozzle 513 may be detachably coupled to the connection tube 512.

The cleaner body 514 may include the cleaner suction device 514a and 514b that produces suction force required to draw in debris on the surface to be cleaned.

Specifically, the cleaner suction device of the cleaner body 514 may include a first suction fan 514b rotationally arranged to produce suction force against the surface to be cleaned, and a first motor 514a arranged to provide rotational force to the first suction fan 514b.

The first motor 514a may perform a function of converting electromagnetic force to mechanical rotational force. To perform the function, the first motor 514a may include a stator 514ab having a coil arranged thereon, a magnetic rotor 514aa that may be rotated by electromagnetic force, and a rotor shaft 514ac connected to the rotor 514aa and rotationally arranged. The first suction fan 514b may be connected to the rotor shaft 514ac of the first motor 514a. The first motor 514a is shown as having an inner-rotor type in which the rotor 514aa is located within the stator 514ab, without being limited thereto, and the first motor 514a may be provided in an outer-rotor type in which the rotor is located outside the stator.

The cleaner 5 may include a dust separator 518 configured to separate and collect dust from the air drawn in. The dust separator 518 may be arranged to separate debris from air flowing into the cleaner body 514. For example, the dust separator 518 may include a cyclone structure arranged to separate the debris from the air drawn in. The cyclone structure of the dust separator 518 may separate debris by centrifugal force produced by rotational movement of the air and debris drawn in, and an inlet through which air flows in may be formed to have a structure capable of leading rotational movement of the air, such as a helical inlet, an inlet in a tangential direction, a guide vane inlet, or the like.

The dust separator 518 arranged in the cleaner 5 according to an embodiment of the disclosure is not, however, limited to the cyclone-type dust separator, and there may be various types of dust separators.

The cleaner 5 may include the dust container 510 that contains the debris drawn in from the surface to be cleaned. The dust container 510 may be formed to filter out and store dust or contaminants from the air drawn in through the suction nozzle 513. Specifically, the dust container 510 may be arranged to collect the contaminants separated by the dust separator 518 from the air drawn in by the suction force produced by the cleaner body 514.

A dust collection chamber C for collecting the debris separated from the air may be formed inside the dust container 510. In other words, the contaminants separated by the dust separator 518 from the air drawn into the cleaner 5 may be collected in the dust collection chamber C. The dust collection chamber C may be defined as an internal space of the dust container 510.

The dust container 510 may be arranged to be detachable from the cleaner body 514.

The cleaner 5 may include a coupling button 510a to detachably couple the dust container 510 to the cleaner body 514. For example, the coupling button 510a may be placed on the top of the dust container 510.

The coupling button 510a may be arranged to be caught on and coupled to a side of the cleaner body 514. Once the coupling button 510a is caught on and coupled to the side of the cleaner body 514, the dust container 510 may be mounted on the cleaner body 514.

When the user pressurizes the coupling button 510a while the dust container 510 is mounted on the cleaner body 514, the coupling button 510a may be released from the coupling and accordingly, the dust container 510 may be separated from the cleaner body 514.

It is not, however, limited thereto, and the dust container 510 may be separated from the cleaner body 514 in various ways.

The cleaner body 514 may include a filter housing. The filter housing may be shaped almost like a donut. The filter housing may receive an exhaust filter 519. There are no limitations on filter types of the exhaust filter 519, and for example, the exhaust filter 519 may include a high-efficiency particulate absorbing (HEPA) filter. The exhaust filter 519 may filter off ultrafine dust that is not collected in the dust container 510, without being separated by the dust separator 518.

The cleaner body 514 may include a handle 515 to be gripped by the user to operate the cleaner 5. The user may grip the handle 515 and move the cleaner 5 for cleaning. A power button to power on/off the cleaner 5 and/or at least one button to control suction strength may be arranged on a bottom surface 515b of the handle 515 for convenience of manipulation.

The cleaner body 514 may include a user interface 550. The user interface 550 may include at least one input interface 560 and at least one output interface 570. The input interface 560 may convert sensory information received from the user to an electric signal.

For example, the input interface 560 may include the power button to power on/off the cleaner 5 and/or the at least one button to control suction strength. In various embodiments of the disclosure, the input interface 560 may further include a microphone for detecting external sound in addition to the mechanical buttons.

The user may turn on or off the cleaner 5 or control suction strength through the input interface 560.

The at least one output interface 570 may deliver various information to the user by outputting the sensory information.

For example, the at least one output interface 570 may include a display 570a (e.g., an LCD panel, an LED panel, an LED module, or the like). In various embodiments of the disclosure, the output interface 570b may include at least one of the display 570a, a light emitter 570b, a speaker, a piezo-electric element or a variable element.

The display 570a may deliver visual information to the user by outputting an image.

The light emitter 570b may deliver visual information to the user by irradiating light.

The speaker may deliver auditory information to the user by outputting various effective sounds and voices.

The piezo-electric element may deliver tactile information to the user by vibrating based on an electric signal. The piezo-electric element may be arranged on the handle 515 to deliver the vibration to the user.

The variable element may deliver tactile information to the user by making a change in shape based on an electric signal. The variable element may be arranged on the handle 515 to deliver the change in shape to the user. For example, the variable element may be arranged on the bottom surface 515b of the handle 515 which is most often touched by the user's hand.

Referring to FIG. 11, the at least one output interface 570 may include the light emitter 570b. The light emitter 570b is a component for irradiating light, and may irradiate light toward the ground or an object in front. The light emitter 570b may include a laser generator and/or an LED. The visual information may be projected on the ground or the object in front by the light irradiated by the light emitter 570b. In various embodiments of the disclosure, to facilitate irradiation of light onto the ground or the object in front, the light emitter 570b may be arranged on the suction nozzle 513. The position of the light emitter 570b is not, however, limited thereto, and any position of the light emitter 570b that makes it easy to irradiate light onto the ground or the object in front may be used as the position of the light emitter 570b.

Referring to FIGS. 10 and 11, in various embodiments of the disclosure, the display 570a may be arranged on a connector 515a that connects the cleaner body 514 to the handle 515, but the position of the display 570a is not limited thereto.

In the case that the display 570a is arranged on the connector 515a that connects the body 514 to the handle 515, an angle between the handle 515 and the display 570a exceeds 180 degrees when viewed from above. Hence, the direction of the display 570a may not correspond to a gaze direction of the user while the user grips the handle 515 and performs cleaning.

In various embodiments of the disclosure, the display 570a may be designed such that an angle between the handle 515 and the display 570a is less than 180 degrees when viewed from above.

For example, a portion of the connector 515a that connects the body 514 to the handle 515, where the display 570a is arranged, may be designed so that an angle with the handle 515 is less than 180 degrees when viewed from above.

In various embodiments of the disclosure, the cleaner 5 may further include a rotator 551 that enables the display 570a to be rotated. The display 570a may be rotated by the rotator 551.

The rotator 551 may include a hinge an/or an actuator.

For example, the rotator 551 may automatically rotate the display 570a based on a certain condition being satisfied.

According to an embodiment of the disclosure, when the certain condition (e.g., a condition in which an intent of the user to use the cleaner 5 is estimated) is satisfied, the display 570a is automatically rotated to a direction that allows the user to observe the display 570a easily, thereby increasing user convenience.

In another example, the rotator 551 may rotate the display 570a according to manipulation by the user.

According to an embodiment of the disclosure, as the display 570a may be rotated to a direction that allows the user to easily observe the display 570a, user convenience increases.

Furthermore, according to an embodiment of the disclosure, the cleaner 5 may include the output interface 570b to easily deliver various information to the user.

The cleaner 5 may further include a battery 516. The battery 516 may be detachably mounted in the cleaner 5. In various embodiments of the disclosure, in a case that the cleaner 5 is a wired cleaner, the battery 516 may be omitted.

Furthermore, the battery 516 may be electrically connected to a charging terminal 675 arranged at a cleaner holder or the docking station 6. The battery 516 may be charged with power supplied from the charging terminal 675 arranged at the docking station 6.

The cleaner 5 may include a dust container cover 511 arranged to open or close the dust container 510. The dust container cover 511 may be arranged on one side of the dust container 510 to open or close the dust collection chamber C.

The dust container cover 511 may be arranged at a first dust container 510 to be rotated on a cover rotation axis 511c.

The cleaner 5 may include a button 517 provided to open or close the dust container cover 511. Specifically, when the button 517 is pressed, the dust container cover 511 may be opened by rotating downward. With the components, the user may easily remove the contaminants in the dust collection chamber C even without separating the dust container 510 from the cleaner body 514.

The structure and operation of the dust container cover 511 to open or close the dust container 510 will be described below.

The configuration of the cleaner 5 as described above is merely an example of the cleaner 5 according to an embodiment of the disclosure, without being limited thereto.

The docking station 6 may be configured to keep or hold the cleaner 5.

The docking station 6 may include a station body 600, and a supporter 605 for supporting the station body 600.

There may be a connection hole 601 formed on an upper portion of the station body 600. The connection hole 601 may be formed at a portion of the station body 600 where the cleaner 5 is mounted. The connection hole 601 may be arranged to connect to the dust container 510 when the cleaner 5 is mounted in the docking station 6. The contaminants in the dust container 510 may be brought into a duct part 620 through the connection hole 601.

The station body 600 may include a housing 611, 612, 613 and 614.

The station body 600 may include a duct part 620, a collector 640, a station suction device 650 and an exhaust filter 655 received in the housing 611, 612, 613 and 614.

When the cleaner 5 is coupled to the docking station 6, the suction nozzle 613 may be received in a receiving space 618 formed at the docking station 6.

The first housing 611 and the second housing 612 may constitute an upper appearance of the docking station 6. The first housing 611 and the second housing 612 may be coupled to each other to form the upper appearance of the docking station 6. The duct 620 and the collector 640 may be received inside the first housing 611 and the second housing 612. A dust bag for storing the dust collected in the dust container 510 may be detachably mounted in the collector 640. The dust in the dust container 510 may be collected in the dust bag through the duct part 620.

The first housing 611 and the second housing 612 may be arranged to have a long axis extending in one direction. The long axis of the first housing 611 and the second housing 612 may set to extend vertically. The first housing 611 and the second housing 612 may be formed to have a curved surface. The first housing 611 and the second housing 612 may be coupled to each other to form almost a cylindrical shape.

The third housing 613 and the fourth housing 614 may constitute a lower appearance of the docking station 6. The third housing 613 and the fourth housing 614 may be coupled to each other to form the lower appearance of the docking station 6. The third housing 613 may be coupled to the bottom of the first housing 611, and the fourth housing 614 may be coupled to the bottom of the second housing 612. The station suction device 650 and the exhaust filter 655 may be received inside the third housing 613 and the fourth housing 614.

The third housing 613 and the fourth housing 614 may be arranged to have a long axis extending in one direction. The long axis of the third housing 613 and the fourth housing 614 may set to extend vertically. The third housing 613 may be arranged to match the shape of the first housing 611, and the fourth housing 614 may be arranged to match the shape of the second housing 612. The third housing 613 and the fourth housing 614 may be coupled to each other to form almost a cylindrical shape.

According to an embodiment of the disclosure, the long axis of the third housing 613 may be arranged to be shorter than the long axis of the first housing 611, and the long axis of the fourth housing 614 may be arranged to be shorter than the long axis of the second housing 612. It is not, however, limited thereto, and the long axis of the third housing and the fourth housing may be equal to or longer than the long axis of the first housing and the second housing.

In an embodiment of the disclosure, the docking station 6 may include sunken portions 612b and 614b. The sunken portions 612b and 614b may include the first sunken portion 612b and the second sunken portion 614b.

The first sunken portion 612b may be formed on the second housing 612. A portion of the second housing 612 may be sunken into the first sunken portion 612b. The first sunken portion 612b may extend along the long axis of the second housing 612. A portion of the connection tube 512 of the cleaner 5 may be received in the first sunken portion 612b.

The second sunken portion 614b may be formed on the fourth housing 614. A portion of the fourth housing 614 may be sunken into the second sunken portion 614b. The second sunken portion 614b may extend along the long axis of the fourth housing 614. A portion of the connection tube 512 of the cleaner 5 may be received in the second sunken portion 612b.

As the second housing 612 and the fourth housing 614 are arranged vertically, the first sunken portion 612b and the second sunken portion 614b may be connected vertically. An upper portion of the connection tube 512 of the cleaner 5 may be received in the first sunken portion 612b, and a lower portion of the connection tube 512 of the cleaner 5 may be received in the second sunken portion 614b.

The third housing 613 may include a first exhaust hole 613a. The second housing 614 may include a second exhaust hole 614a. The third housing 613 and the fourth housing 614 receive the station suction device 650 therein, and thus need to discharge the air drawn in to the outside. With the first exhaust hole 613a and the second exhaust hole 614a included in the third housing 613 and the fourth housing 614, the air drawn in by the station suction device 650 may be discharged out of the third housing 613 and the fourth housing 614 through the exhaust filter 655.

The station suction device 650 may be arranged to produce suction force to release the contaminants out of the dust container 510. The station suction device 650 may be arranged to move the air from the dust container 510 into the docking station 6 when the cleaner 5 is mounted in the docking station 6.

Specifically, the station suction device 650 may include a second suction fan 652 rotationally arranged to produce suction force, and a second motor 651 arranged to provide rotational force to the second suction fan 652.

The second motor 651 may perform a function of converting electromagnetic force to mechanical rotational force. To perform the function, the second motor 651 may include a stator having a coil arranged thereon, a magnetic rotor that may be rotated by electromagnetic force, and a rotor shaft connected to the rotor and rotationally arranged. The second suction fan 652 may be connected to the rotor shaft of the second motor 651.

The station body 600 may include a shutter sh arranged to prevent the contaminants released from the dust container 510 and collected in the collector 640 from flowing backward. The shutter sh may be arranged to pass the air moving toward the collector 640 from the dust container 510 and block the air moving toward the dust container 510 from the collector 640, thereby preventing the contaminants collected in the collector 640 from flowing backward.

Specifically, the shutter sh may be arranged between the duct part 620 and the collector 640 to open a flow path between the duct part 620 and the collector 640 by means of an airflow toward the collector 640 from the duct part 620 and close the flow path between the duct part 620 and the collector 640 by means of an airflow toward the duct part 620 from the collector 640.

The shutter sh may be arranged in the first housing 611 and the second housing 612.

The shutter sh may be arranged to be adjacent to an inlet of the dust bag of the collector 640.

In an embodiment of the disclosure, the docking station 6 may include the supporter 605.

The supporter 605 may be coupled to the housing 611, 612, 613 and 614 of the station body 600. Specifically, the supporter 605 may be coupled to the third housing 613 and the fourth housing 614. The supporter 605 may be coupled to the bottom of the station body 600. The supporter 605 may form the receiving space 618 to receive the suction nozzle 513 of the cleaner 5 by being coupled to the station body 600.

The supporter 605 may be arranged to be rotated against the ground. In an embodiment of the disclosure, the supporter 605 may include a stationary part fixed onto the ground, and a rotation part arranged to be rotated against the stationary part. The rotation part may be coupled to the housing 611, 612, 613 and 614. As the rotation part is rotated against the stationary part, the housing 611, 612, 613 and 614 coupled to the rotation part may be rotated against the stationary part. Accordingly, the housing 611, 612, 613 and 614 may be rotated against the ground.

The configuration of the docking station 6 as described above is merely an example of a docking station according to an embodiment of the disclosure, without being limited thereto.

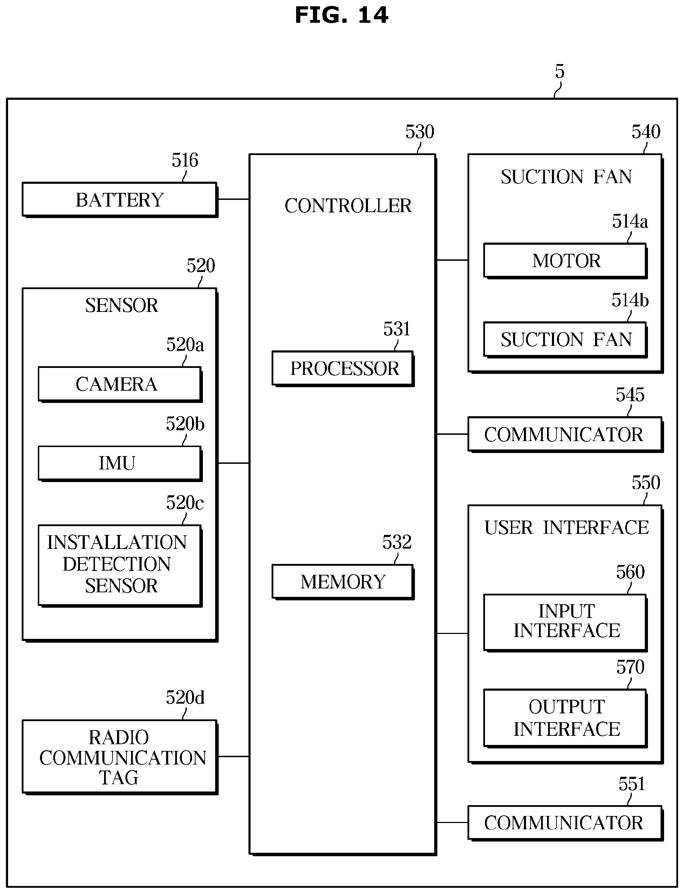

FIG. 14 is a control block diagram of a cleaner according to an embodiment of the disclosure.

Referring to FIG. 14, the cleaner 5 may include the battery 516, a sensor, a radio communication tag 520d, a suction device 540, a communicator, a user interface and/or a controller 530.

The battery 516 may supply power to various electronic components included in the cleaner 5. For example, the battery 516 may supply power to the suction device 540, a communicator 545, the user interface 550, the sensor 520, the radio communication tag 520d, the rotator (actuator) 551 and/or the controller 530. The power supplied from the battery 516 may be transformed by the controller 530 and then supplied to the respective electronic components.

The sensor 520 may obtain various information relating to the cleaner 5.

For example, the sensor 520 may obtain information relating to the location of the cleaner 5. The information relating to the location of the cleaner 5 may include image information and/or motion information. In another example, the sensor 520 may obtain information relating to a state of the cleaner 5. For example, the information relating to a state of the cleaner 5 may include information about whether the cleaner 5 is docked on the docking station.

The sensor 520 may include the camera 520a, an IMU 520b and/or an installation detection sensor 520c.

The camera 520a may include an image sensor for generating image data by collecting incident light from outside. For example, the camera 520a may include at least one of an RGB camera for generating a color image by collecting visible rays and an infrared camera for generating an infrared image. The camera 520a may include a binocular camera (stereo camera). The binocular camera may obtain information about depth to an object by using binocular disparity. The image data obtained by the camera 520a may be transmitted to the controller 530 of the cleaner 5. The controller 530 may identify an external object by processing the image data. In an embodiment of the disclosure, the controller 530 may identify the location of the cleaner 5 based on image information obtained from the camera 520a.

For example, the cleaner 5 may receive and store information about a cleaning map from an external device, and the information about the cleaning map may include information about each object placed here and there in the indoor space.

The controller 530 may identify an external object based on the image data processed, and identify a current location of the cleaner 5 based on information about the external object and objects included in the cleaning map. For example, when a television at 5 meters (m) ahead is identified in an image obtained by the camera 520a, the controller 530 may identify that the cleaner 5 is located 5 m behind the television included in the cleaning map.

In various embodiments of the disclosure, the camera 520a may be arranged in a portion that is moved the least when the user holds the cleaner 5 and performs cleaning. For example, the camera 520a may be arranged on the main body 514 of the cleaner 5. In various embodiments of the disclosure, the camera 520a may be arranged in a portion closest to the handle 515 (e.g., connector 515a between the handle 515 and the main body 514).

For economical power consumption, the camera 520a may be turned on only when the cleaner is being used. In an embodiment of the disclosure, the controller 530 may power on the camera 520a based on a certain operation condition satisfied, and power off the camera 520a based on a certain off condition satisfied.

For example, the controller 530 may turn on the camera 520a based on the cleaner 5 separated from the docking station 6 and/or the cleaner 5 powered on. Taking into account the user who moves the cleaner in a power-off state, the controller 530 may turn on the camera 520a based on the cleaner 5 separated from the docking station 6.

The controller 530 may turn off the camera 520a based on the cleaner 5 docked on the docking station 6 and/or the cleaner 5 powered off. Taking into account the user who moves the cleaner 5 in a power-off state, the camera 520a may be turned off based on the cleaner 5 docked on the docking station 6. However, as there is an occasion when the user does not dock the cleaner 5 with the docking station 6 even after the cleaning is completed, the controller 530 may turn off the camera 520a based on a power-off period elapsing a certain period of time (e.g., 3 minutes).

The IMU 520b may obtain inertial information (e.g., acceleration, speed and direction) of the cleaner 5. The IMU 520b may include a gyro sensor for detecting a motion of the cleaner 5.

The controller 530 may identify the location of the cleaner 5 based on the inertial information obtained from the IMU 520b.

The controller 530 may identify the location of the cleaner 5 by dead reckoning, based on the data obtained from the IMU 520b.

For example, the controller 530 may identify the location of the cleaner 5 by dead reckoning, based on the data obtained from the IMU 520b, based on a preset starting point in the cleaning map. The preset starting point may correspond to the location of the docking station 6. The location of the cleaner 5 identified by dead reckoning may be initialized based on the cleaner 5 being docked on the docking station.

The installation detection sensor 520c may detect the docking between the cleaner 5 and the docking station 6.

For example, the installation detection sensor 520c may include a sensor for outputting different electric signals for a case that the dust container 510 is mounted on the docking station 6 and a case that the dust container 510 is not mounted on the docking station 6. For example, the installation detection sensor 520c may be configured to include an infrared sensor, a piezo-electric sensor, a mechanical switch, or the like, without being limited thereto.

In another example, the installation detection sensor 520c may include a sensor for the battery 516 for detecting a state of charge of the battery 516. The controller 530 may determine that the cleaner 5 is docked in the docking station 6 when detecting the battery 516 being charged.

The radio communication tag 520d is able to wirelessly communicate with an external wireless communication anchor. For example, the radio communication tag 520d may transmit a wireless signal to the wireless communication anchor. The wireless communication anchor may identify a location of the radio communication tag 520d by using various positioning algorithms, such as angle of arrival (AoA), angle of departure (AoD), time of arrival (ToA), time of flight (ToF), or the like, based on the signal received from the radio communication tag 520d.

To identify an accurate location of the radio communication tag 520d, a plurality of wireless communication anchors are synchronized with one another and placed at predesignated locations.

In various embodiments of the disclosure, the radio communication tag 520d may be activated according to a certain condition to transmit wireless signals at certain intervals.

For example, the radio communication tag 520d may be an ultra wideband (UWB) tag for transmitting UWB signals. In this case, the wireless communication anchor may be a UWB anchor. Each of the plurality of wireless communication anchors may calculate a distance to the radio communication tag 520d, and based on the distance between each of the plurality of wireless communication anchors and the radio communication tag 520d, a location of the radio communication tag 520d may be identified.

For example, the plurality of wireless communication anchors may transmit data related to the distance to the radio communication tag 520d and/or location data of the radio communication tag 520d to an external device (e.g., the robot cleaner 1, the user equipment 2, the server 3, the home appliances 4, the cleaner 5 and/or the docking station 6).

An entity to identify the location of the radio communication tag 520d based on distances between the plurality of wireless communication anchors and the radio communication tag 520d may be at least one of the plurality of wireless communication anchors or the robot cleaner 1, the user equipment 2, the server 3, the home appliances 4, the cleaner 5 and/or the docking station 6, without being limited thereto.

For example, the location of the cleaner may be identified based on a signal output from the radio communication tag and received through each of the plurality of wireless communication anchors.

According to an embodiment of the disclosure, with the radio communication tag 520d included in the cleaner 5, the location of the cleaner 5 may be accurately identified by the plurality of wireless communication anchors installed in the indoor space.

The suction device 540 may generate suction force to draw in debris from a surface to be cleaned through the suction nozzle 513. The suction device 540 may include the first motor 514a and the first suction fan 514b as described above.

The communicator 545 may perform connection with an external device (e.g., at least one of the robot cleaner 1, the user equipment 2, the server 3, the home appliances 4 and the docking station 6) over a network. The controller 530 may obtain various information, various signals and/or various data from the external device through the communicator 545. For example, the communicator 545 may receive a remote-control signal from the external device. The controller 530 may obtain an AI model (algorithm) used to process the various data from the external device through the communicator 545.

In various embodiments of the disclosure, the communicator 545 may receive information about a non-cleaned zone from the external device. In various embodiments of the disclosure, the communicator 545 may transmit update information of the cleaning map to the external device.

The communicator 545 may include various communication circuits. The communicator 545 may include a wireless communication circuit and/or a wired communication circuit. The wireless communication circuit may support various wireless communication, such as a wireless LAN, home RF, infrared communication, UWB communication, Wi-Fi, Bluetooth, Zigbee and/or a long-range wireless network (e.g., cellular communication).

In various embodiments of the disclosure, to lighten and save cost of the cleaner 5, the communicator 545 may include only a minimum communication module. For example, the communicator 545 may include a first communication module (e.g., Bluetooth communication module). In another example, the communicator 545 may include a second communication module (e.g., Wi-Fi communication module). In other words, the first communication module and the second communication module may be configured in difference communication schemes. The communication module included in the communicator 545 is not, however, limited thereto.

The user interface 550 may include the input interface 560 and the output interface 570. As described above, the input interface 560 may include at least one input device (e.g., a mechanical button, a touch button, a microphone, or the like) that may convert sensory information received from the user to an electric signal. The output interface 570 may include at least one output device (e.g., the display 570a, the light emitter 570b, a speaker, a piezo-electric element or a variable element, or the like) that may convert an electric signal to sensory information.

The rotator 551 may include an actuator for rotating the display 570a. The controller 530 may control the actuator to rotate the display 570a at a certain angle based on a preset condition satisfied.

The controller 530 may control the components of the cleaner 5. The controller 530 may include a processor 531 and memory 532. The processor 531 may include logic circuits and operation circuits in hardware. The processor 531 may control the electrically connected components of the cleaner 5 based on a program, instructions and/or data stored in the memory 532 for an operation of the cleaner 5. The controller 530 may be implemented with a control circuit including circuit elements, such as a condenser, an inductor and a resistor. The processor 531 and the memory 532 may be implemented in separate chips or in a single chip. Furthermore, the controller 530 may include a plurality of processors and a plurality of memories.

The memory 532 may store the program, application and/or data for the operation of the cleaner 5 and store data created by the processor 531. The memory 532 may include non-volatile memory, such as read only memory (ROM) and flash memory for storing the data for a long time. The memory 532 may include volatile memory for temporarily storing data, such as static random-access memory (SRAM) and dynamic random access memory (DRAM).

For example, the memory 532 may store the information about a non-cleaned zone received from an external device.

The components of the cleaner 5 have thus far been described. The components of the cleaner 5 are not limited to what are described above, but some of the components may be omitted or some components may further be added according to various embodiments.

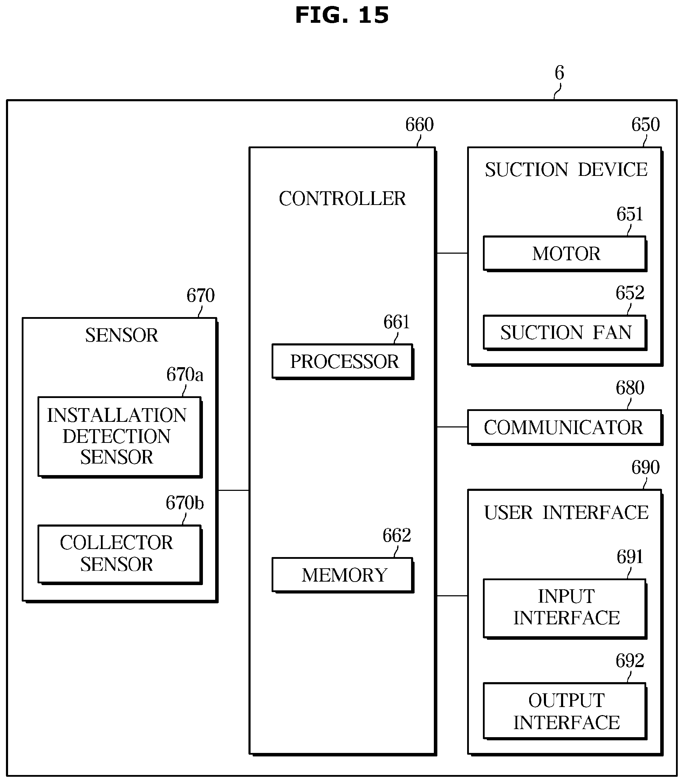

FIG. 15 illustrates a control block diagram of a docking station of a cleaner according to an embodiment of the disclosure.

Referring to FIG. 15, the docking station 6 may include a sensor 670, the suction device 650, a controller 660, a communicator 680 and/or a user interface 690.

The sensor 670 may include at least one sensor for detecting a state of the docking station 6.

For example, the sensor 670 may include an installation detection sensor 670a and a collector sensor 670b.

The installation detection sensor 670a may be arranged at a location adjacent to the connector 601 of the docking station 6 connected to the dust container 510. The installation detection sensor may output different electric signals for a case that the dust container 510 is mounted on the docking station 6 and a case that the dust container 510 is not mounted on the docking station 6.

For example, the installation detection sensor 670a may be configured to include an infrared sensor, a piezo-electric sensor, or the like, without being limited thereto.

In another example, the installation detection sensor 670a may include a sensor for detecting a state of connection of the charging terminal 675.

The docking station 6 may include a collector sensor 670b for detecting a saturation degree of the collector 640.

The collector sensor 670b may include a pressure sensor, and may detect pressure different from a normal operation when the collector 640 is saturated, disturbing an air flow drawn in by the suction device 650. In this case, the collector sensor 670b may output an electric signal corresponding to the pressure different from the normal operation, and the controller 660 may receive the electric signal and detect that the collector 640 is saturated.

The type of the collector sensor 670b is not, however, limited thereto.

The suction device 650 may generate suction force to release the contaminants out of the dust container 510. Specifically, the suction device 650 may be arranged to move the air from the dust container 510 into the docking station 6 while the cleaner 5 is mounted in the docking station 6 and is releasing dust. As described above, the suction device 650 may include the second motor 651 and the second suction fan 652.

The communicator 680 may include various communication circuits. The communicator 680 may include a wireless communication circuit and/or a wired communication circuit. The wireless communication circuit may support various wireless communication, such as a wireless LAN, home RF, infrared communication, UWB communication, Wi-Fi, Bluetooth, Zigbee and/or a long-range wireless network (e.g., cellular communication).

It is common for the docking station 6 to be fixed at a location, so the docking station 6 is not required to be lighten more than the cleaner 5 is. Furthermore, the docking station 6 often receives power constantly from an external power source.

In various embodiments of the disclosure, the docking station 6 may include a communication module not included in the cleaner 5.

For example, when the cleaner 5 includes a first communication module (e.g., Bluetooth communication module), the docking station 6 may include the first communication module (e.g., Bluetooth communication module) and a second communication module (e.g., Wi-Fi communication module). In other words, the docking station 6 may include the second communication module not equipped in the cleaner 5.

The user interface 690 may include an input interface 691 and an output interface 692.

The input interface 691 may include powering on/off the docking station 6, starting/stopping an operation of releasing contaminants from the dust container 510 (dust release operation), setting an operation of the docking station 6, or the like.

The output interface 692 may output information about an operation or state of the docking station 6. The information about an operation or state of the docking station 6 may include a state of the progress of the dust release operation, whether the cleaner 5 has been mounted in the docking station 6, whether the collector 640 is saturated, or the like. In various embodiments of the disclosure, the output interface 692 may output information about a non-cleaned zone. However, when the output interface 692 of the docking station 6 outputs the information about the non-cleaned zone, the user is bound to check the information about the non-cleaned zone at a fixed place, but when the information about the non-cleaned zone is output through the output interface 550 of the cleaner 5, the user is able to check the information about the non-cleaned zone in real time while performing cleaning with the cleaner 5.

The controller 660 may control the components of the docking station 6. The controller 660 may include a processor 661 and memory 662. The processor 661 may include logic circuits and operation circuits in hardware. The processor 661 may control the electrically connected components of the robot cleaner 1 based on a program, instructions and/or data stored in the memory 662 for an operation of the docking station 6. The controller 660 may be implemented with a control circuit including circuit elements, such as a condenser, an inductor and a resistor. The processor 661 and the memory 662 may be implemented in separate chips or in a single chip. Furthermore, the controller 660 may include a plurality of processors and a plurality of memories.

The memory 662 may store the program, application and/or data for the operation of the docking station 6 and store data created by the processor 661. The memory 662 may include non-volatile memory, such as ROM and flash memory for storing the data for a long time. The memory 662 may include volatile memory for temporarily storing data, such as SRAM and DRAM.

For example, the memory 662 may store the information about a non-cleaned zone received from an external device.

The components of the docking station 6 have thus far been described. The components of the docking station 6 are not limited to what are described above, but some of the components may be omitted or some components may further be added according to various embodiments.

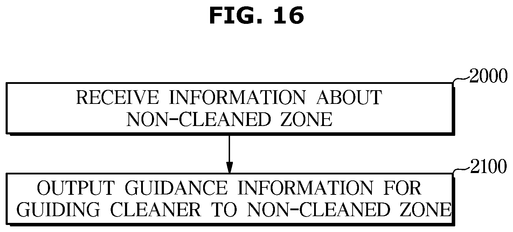

FIG. 16 is a flowchart illustrating a procedure for a cleaner to output guidance information according to an embodiment of the disclosure.

Referring to FIG. 16, the cleaner 5 in an embodiment may receive information about a non-cleaned zone, in operation 2000.

The information about the non-cleaned zone may be obtained from the robot cleaner 1 and sent to the cleaner 1 in various methods.

In an embodiment of the disclosure, the communicator 545 of the cleaner 5 may receive the information about the non-cleaned zone from an external device 1, 2, 3, 4 or 6, and the controller 545 may receive the information about the non-cleaned zone from the communicator 545.

In various embodiments of the disclosure, the communicator 545 of the cleaner 5 may receive the information about the non-cleaned zone from the external device under a certain condition.

For example, the cleaner 5 may receive the information about the non-cleaned zone from the external device based on the cleaner 5 being charged.

When the cleaner 5 is docked in the docking station 6 and is being charged, the communicator 545 may be switched into an active state. While in the active state, the communicator 545 is able to receive the information about the non-cleaned zone from the external device. The active state may refer to the communicator 545 having been switched into an active mode instead of a sleep mode and/or an inactive mode.

The controller 530 may control the communicator 545 to be switched into the active mode based on the cleaner 5 being charged.

In another example, the cleaner 5 may receive the information about the non-cleaned zone from the external device based on the cleaner 5 powered on.

The controller 530 may control the communicator 545 to be switched into the active mode based on the cleaner 5 powered on.

In another example, the cleaner 5 may receive the information about the non-cleaned zone from the external device based on the cleaner 5 separated from the docking station 6.

The controller 530 may control the communicator 545 to be switched into the active mode based on the cleaner 5 separated from the docking station 6.

In an embodiment of the disclosure, the controller 530 may control the communicator 545 to be switched into the active mode based on separation of the cleaner 5 from the docking station 6 detected by the installation detection sensor 520c.

In an embodiment of the disclosure, when the cleaner 5 has no installation detection sensor 520c, the communicator 545 may be switched into the active mode based on reception of a wakeup signal from the communicator 680 of the docking station 6. The controller 660 of the docking station 6 may control the communicator 680 to transmit the wakeup signal to the cleaner 5 based on separation of the cleaner 5 from the docking station 6 detected by the installation detection sensor 670a.

In an embodiment of the disclosure, the communicator 545 may receive the information about the non-cleaned zone from the external device based on at least one of the cleaner 5 being charged, the cleaner 5 powered on, or the cleaner 5 separated from the docking station 6.

Conditions in which the communicator 545 is able to receive the information about the non-cleaned zone from the external device are not, however, limited thereto, and it is obvious that the communicator 545 may always operate in the active mode.

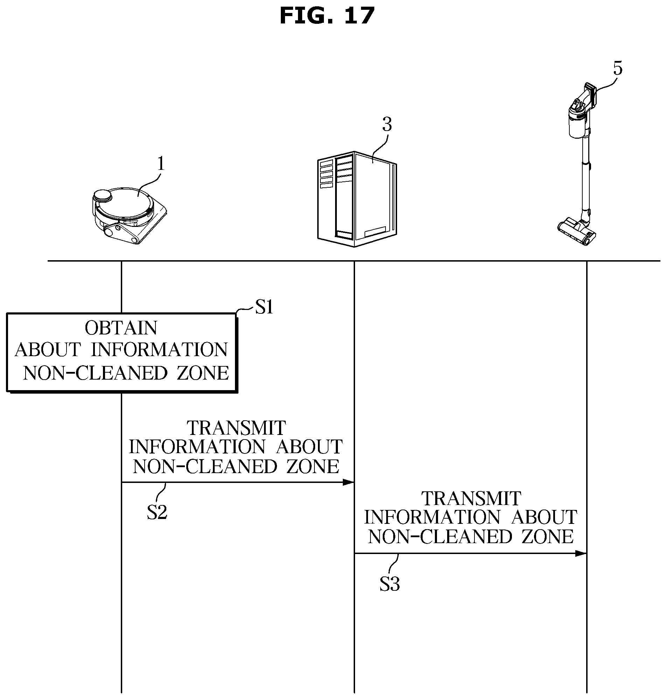

Various examples in which the cleaner 5 receives information about a non-cleaned zone from an external device will now be described with reference to FIGS. 17 to 21.

FIG. 17 illustrates a procedure in which a cleaner receives information about a non-cleaned zone according to an embodiment of the disclosure.

Referring to FIG. 17, the information about the non-cleaned zone obtained from the robot cleaner 1 may be sent to the cleaner 5 via the server 3. For this, both the robot cleaner 1 and the cleaner 5 may include a communication module (e.g., Wi-Fi communication module) capable of communicating with the server 3.

Referring to FIG. 17, the robot cleaner 1 according to an embodiment may obtain the information about the non-cleaned zone while performing cleaning according to a preset cleaning schedule, in S1.

The robot cleaner 1 may transmit the information about the non-cleaned zone to the server 3, in S2.

For example, the robot cleaner 1 may store the information about the non-cleaned zone based on occurrence of the non-cleaned zone while performing cleaning according to the preset cleaning schedule. In response to the occurrence of the non-cleaned zone, the robot cleaner 1 may transmit information about the non-cleaned zone to the server 3 in real time and update the information. In another example, the robot cleaner 1 may transmit the information about the non-cleaned zone to the server 3 based on cleaning completed according to the preset cleaning schedule.

The information about the non-cleaned zone may include at least one of a location of the non-cleaned zone in a cleaning map M, a name of the room in which the non-cleaned zone is located or a cause of occurrence of the non-cleaned zone.

The server 3 may store the information about the non-cleaned zone received from the robot cleaner 1 temporarily and/or permanently.

The server 3 may transmit the information about the non-cleaned zone received from the robot cleaner 1 to the cleaner 5, in S3.

In various embodiments of the disclosure, the server 3 may transmit the information about the non-cleaned zone directly to the cleaner 5 in response to reception of the information about the non-cleaned zone from the robot cleaner 1.

In various embodiments of the disclosure, the server 3 may transmit the information about the non-cleaned zone when the cleaner 5 satisfies a condition to receive the information about the non-cleaned zone after receiving the information about the non-cleaned zone from the robot cleaner 1.

For example, the server 3 may transmit the information about the non-cleaned zone to the cleaner 5 when the communicator 545 of the cleaner 5 is switched into the active mode.

In an embodiment of the disclosure, the communicator 545 of the cleaner 5 may transmit an activation message to the server 3 based on switching into the active mode, and the server 3 may forward the information about the non-cleaned zone temporarily stored, based on reception of the activation message from the cleaner 5.

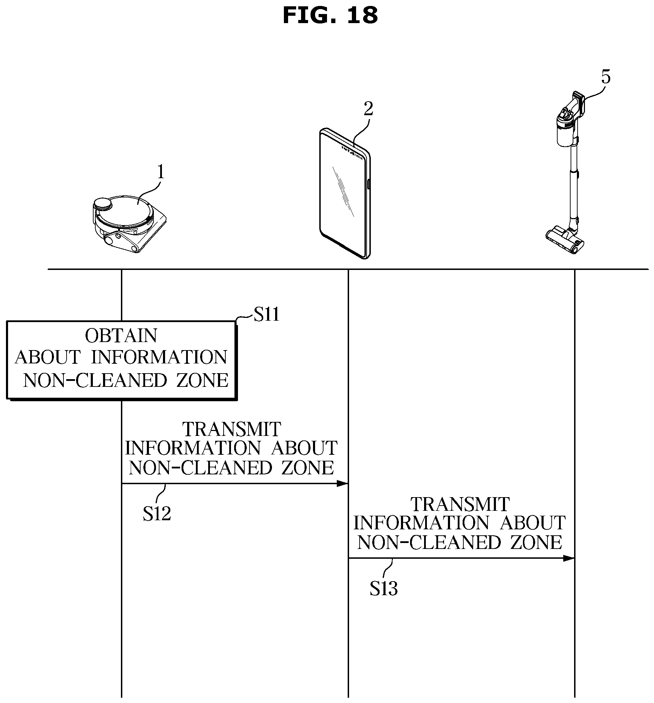

FIG. 18 illustrates a procedure in which a cleaner receives information about a non-cleaned zone according to an embodiment of the disclosure.

Referring to FIG. 18, the information about the non-cleaned zone obtained from the robot cleaner 1 may be sent to the cleaner 5 via the user equipment 2. For this, both the robot cleaner 1 and the cleaner 5 may include a communication module (e.g., Wi-Fi communication module) that may communicate with the user equipment 2.

Referring to FIG. 18, the robot cleaner 1 according to an embodiment may obtain the information about the non-cleaned zone while performing cleaning according to a preset cleaning schedule, in S11.

The robot cleaner 1 may transmit the information about the non-cleaned zone to the user equipment 2, in S12.

For example, the robot cleaner 1 may store the information about the non-cleaned zone based on occurrence of the non-cleaned zone while performing cleaning according to the preset cleaning schedule. In response to the occurrence of the non-cleaned zone, the robot cleaner 1 may transmit information about the non-cleaned zone to the user equipment 2 in real time. In another example, the robot cleaner 1 may transmit the information about the non-cleaned zone to the user equipment 2 based on cleaning completed according to a preset cleaning schedule.

The user equipment 2 may store the information about the non-cleaned zone received from the robot cleaner 1 temporarily and/or permanently.

The user equipment 2 may transmit the information about the non-cleaned zone received from the robot cleaner 1 to the cleaner 5, in S13.

In various embodiments of the disclosure, the user equipment 2 may transmit the information about the non-cleaned zone directly to the cleaner 5 in response to reception of the information about the non-cleaned zone from the robot cleaner 1.

In various embodiments of the disclosure, the user equipment 2 may transmit the information about the non-cleaned zone when the cleaner 5 satisfies a condition to receive the information about the non-cleaned zone after receiving the information about the non-cleaned zone from the robot cleaner 1.

For example, the user equipment 2 may transmit the information about the non-cleaned zone to the cleaner 5 when the communicator 545 of the cleaner 5 is switched into the active mode.

In an embodiment of the disclosure, the communicator 545 of the cleaner 5 may transmit an activation message to the user equipment 2 based on switching into the active mode, and the user equipment 2 may forward the information about the non-cleaned zone temporarily stored, based on reception of the activation message from the cleaner 5.

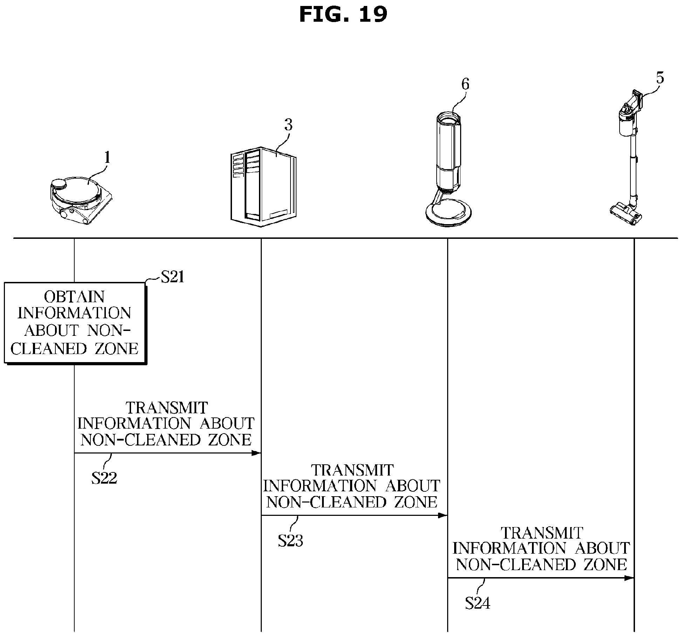

FIG. 19 illustrates a procedure in which a cleaner receives information about a non-cleaned zone according to an embodiment of the disclosure.

Referring to FIG. 19, the information about the non-cleaned zone obtained from the robot cleaner 1 may be sent to the cleaner 5 via the server 3 and the docking station 6. For this, both the robot cleaner 1 and the docking station 6 may include the first communication module (e.g., Wi-Fi communication module) capable of communicating with the server 3. However, the cleaner 5 may include the second communication module (e.g., Bluetooth communication module) capable of communicating with the docking station 6 but may not include the first communication module capable of communicating with the server 3.

Referring to FIG. 19, the robot cleaner 1 according to an embodiment may obtain the information about the non-cleaned zone while performing cleaning according to a preset cleaning schedule, in S21.

The robot cleaner 1 may transmit the information about the non-cleaned zone to the server 3 through the first communication module, in S22.

For example, the robot cleaner 1 may store the information about the non-cleaned zone based on occurrence of the non-cleaned zone while performing cleaning according to the preset cleaning schedule. In response to the occurrence of the non-cleaned zone, the robot cleaner 1 may transmit the information about the non-cleaned zone to the server 3 in real time. In another example, the robot cleaner 1 may transmit the information about the non-cleaned zone to the server 3 based on cleaning completed according to the preset cleaning schedule.

The server 3 may store the information about the non-cleaned zone received from the robot cleaner 1 temporarily.

The server 3 may transmit the information about the non-cleaned zone received from the robot cleaner 1 to the docking station 6, in S23.

In various embodiments of the disclosure, the server 3 may transmit the information about the non-cleaned zone received from the robot cleaner 1 to the docking station 6 based on the docking station 6 powered on.

The docking station 6 may temporarily store the information about the non-cleaned zone received from the server 3.

The docking station 6 may send the information about the non-cleaned zone received from the server 3 to the cleaner 5 through the second communication module.

In various embodiments of the disclosure, the docking station 6 may transmit the information about the non-cleaned zone when the cleaner 5 satisfies a condition to receive the information about the non-cleaned zone after receiving the information about the non-cleaned zone from the server 3.

For example, the docking station 6 may transmit the information about the non-cleaned zone to the cleaner 5 when the communicator 545 of the cleaner 5 is switched into the active mode.

In an embodiment of the disclosure, the communicator 545 of the cleaner 5 may be paired with the docking station 6 in the active mode, and the docking station 6 may transmit the information about the non-cleaned zone to the paired cleaner 5.

In an embodiment of the disclosure, the communicator 545 of the cleaner 5 may be paired with the docking station 6 based on switching into the active mode, and the docking station 6 may forward the information about the non-cleaned zone temporarily stored, based on the paring with the cleaner 5. In the disclosure, pairing between the cleaner 5 and the docking station 6 may include switching the cleaner 5 and the docking station 6 into a communication-enabled state.

According to an embodiment of the disclosure, even when the cleaner 5 is not equipped with a communication module capable of communicating with the server 3, the cleaner 5 is able to communicate with the server 3 through the docking station 6. According to an embodiment of the disclosure, a relatively heavy communication module does not need to be installed in the cleaner 5 that requires to be lightened.

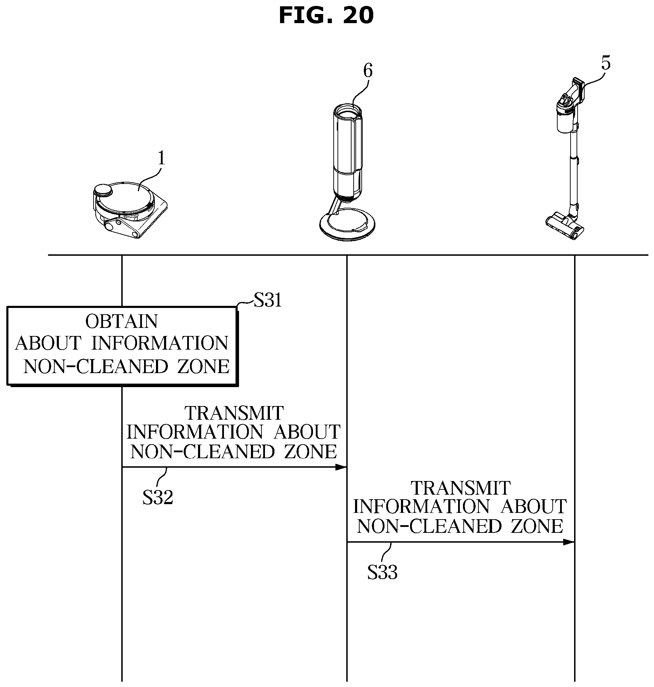

FIG. 20 illustrates a procedure in which a cleaner receives information about a non-cleaned zone according to an embodiment of the disclosure.

Referring to FIG. 20, the information about the non-cleaned zone obtained from the robot cleaner 1 may be sent to the cleaner 5 via the docking station 6. For this, the robot cleaner 1 and the docking station 6 may include the first communication module (e.g., Wi-Fi direct communication module) enabling communication with each other, and the docking station 6 and the cleaner 5 may include the second communication module (e.g., Bluetooth) enabling communication with each other but the cleaner 5 may not include the first communication module.

Referring to FIG. 20, the robot cleaner 1 according to an embodiment may obtain the information about the non-cleaned zone while performing cleaning according to a preset cleaning schedule, in S31.

The robot cleaner 1 may transmit the information about the non-cleaned zone to the docking station 6 through the first communication module, in S32.

For example, the robot cleaner 1 may store the information about the non-cleaned zone based on occurrence of the non-cleaned zone while performing cleaning according to the preset cleaning schedule. In response to the occurrence of the non-cleaned zone, the robot cleaner 1 may transmit the information about the non-cleaned zone to the docking station 6 in real time. In another example, the robot cleaner 1 may transmit the information about the non-cleaned zone to the docking station 6 based on cleaning completed according to the preset cleaning schedule.

The docking station 6 may store the information about the non-cleaned zone received from the robot cleaner 1 temporarily and/or permanently.

The docking station 6 may transmit the information about the non-cleaned zone received from the robot cleaner 1 to the cleaner 5, in S33.

In various embodiments of the disclosure, the docking station 6 may transmit the information about the non-cleaned zone when the cleaner 5 satisfies a condition to receive the information about the non-cleaned zone after receiving the information about the non-cleaned zone from the robot cleaner 1.

For example, the docking station 6 may transmit the information about the non-cleaned zone to the cleaner 5 when the communicator 545 of the cleaner 5 is switched into the active mode.

In an embodiment of the disclosure, the communicator 545 of the cleaner 5 may be paired with the docking station 6 in the active mode, and the docking station 6 may transmit the information about the non-cleaned zone to the paired cleaner 5.

In an embodiment of the disclosure, the communicator 545 of the cleaner 5 may be paired with the docking station 6 based on switching into the active mode, and the docking station 6 may forward the information about the non-cleaned zone temporarily stored, based on the paring with the cleaner 5. In the disclosure, pairing between the cleaner 5 and the docking station 6 may include switching the cleaner 5 and the docking station 6 into a communication-enabled state.

According to an embodiment of the disclosure, even when the cleaner 5 is not equipped with a communication module capable of communicating with the robot cleaner 1, the cleaner 5 is able to communicate with the robot cleaner 1 through the docking station 6. According to an embodiment of the disclosure, a relatively heavy communication module does not need to be installed in the cleaner 5 that requires to be lightened.

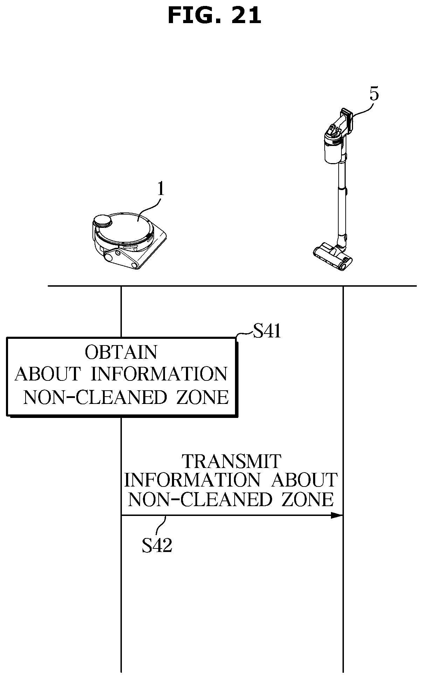

FIG. 21 illustrates a procedure in which a cleaner receives information about a non-cleaned zone according to an embodiment of the disclosure.

Referring to FIG. 21, the information about the non-cleaned zone obtained from the robot cleaner 1 may be sent directly to the cleaner 5. For this, the robot cleaner 1 and the cleaner 5 may include a communication module (e.g., Bluetooth module) enabling communication with each other.

Referring to FIG. 21, the robot cleaner 1 according to an embodiment may obtain the information about the non-cleaned zone while performing cleaning according to a preset cleaning schedule, in S41.

The robot cleaner 1 may transmit the information about the non-cleaned zone to the cleaner 5 through the communication module enabling communication with each other, in S42.

For example, the robot cleaner 1 may store the information about the non-cleaned zone based on occurrence of the non-cleaned zone while performing cleaning according to the preset cleaning schedule. In response to the occurrence of the non-cleaned zone, the robot cleaner 1 may transmit the information about the non-cleaned zone to the cleaner 5 in real time. In another example, the robot cleaner 1 may transmit the information about the non-cleaned zone to the cleaner 5 based on cleaning completed according to the preset cleaning schedule.

The cleaner 5 may store the information about the non-cleaned zone received from the robot cleaner 1 temporarily and/or permanently.

Although various routes for the cleaner 5 to receive the information about the non-cleaned zone obtained by the robot cleaner 1 have thus far been described, the routes for the cleaner 5 to receive the information about the non-cleaned zone are not limited thereto and any method that may be technically materialized may be employed.

Turning back to FIG. 16, the cleaner 5 may output guidance information for guiding the cleaner 5 to the non-cleaned zone based on the information about the non-cleaned zone, in operation 2100.

In an embodiment of the disclosure, the cleaner 5 may output the guidance information through the output interface 570. In various embodiments of the disclosure, the cleaner 5 may output the guidance information as visual information through the display 570a and/or the emitter 570b, as auditory information through the speaker, or as tactile information through the piezo-electric element and/or variable element.

In an embodiment of the disclosure, the cleaner 5 may output the guidance information based on a certain condition satisfied. The certain condition may include a condition in which an intent of the user to use the cleaner 5 is estimated.

In various embodiments of the disclosure, the cleaner 5 may control the rotator 551 such that the display 570a in a first position is rotated into a predefined second position based on the certain condition satisfied. In this case, the first position is a position coupled to the connector 515a, and the second position refers to a position which is separated from the connector 515a and at which an angle between the handle 515 and the display 570a is 180 degrees or less when viewed from above. The second position may be defined in advance as a position that allows the user to easily observe the display 570a.

According to an embodiment of the disclosure, the user may be guided into the non-cleaned zone at a suitable time by outputting the guidance information only when the user intends to use the cleaner 5.

According to an embodiment of the disclosure, in outputting the guidance information, the display 570a may be rotated into a position at which the user easily observes the display 570a, thereby increasing user convenience.

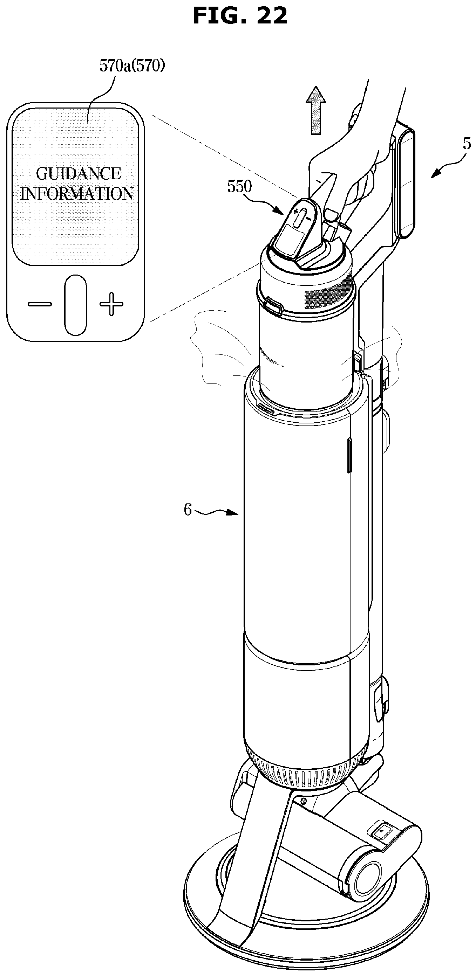

FIG. 22 illustrates an occasion when a cleaner outputs guidance information based on a certain condition according to an embodiment of the disclosure.

Referring to FIG. 22, the cleaner 5 may output the guidance information based on the cleaner 5 separated from the docking station 6. Although an example in which the guidance information is output as visual information is illustrated in FIG. 22, the guidance information may be output as auditory information and/or tactile information corresponding to the visual information.

In an embodiment of the disclosure, the controller 530 of the cleaner 5 may control the output interface 570 to output the guidance information based on the cleaner 5 separated from the docking station 6.

The controller 530 of the cleaner 5 may detect separation of the cleaner 5 from the docking station 6 through the installation detection sensor 520c.

In response to the docking station 6 detecting, through the installation detection sensor 670a, separation of the cleaner 5 from the docking station 6, the docking station 6 may transmit a wakeup signal to the cleaner 5, and the controller 530 of the cleaner 5 may detect separation of the cleaner 5 from the docking station 6 in response to reception of the wakeup signal from the docking station 6.

According to an embodiment of the disclosure, when the user wants to use the cleaner 5 and separates the cleaner 5 from the docking station 6, guidance information may be output, and thus, the user may immediately check what zone needs to be cleaned.

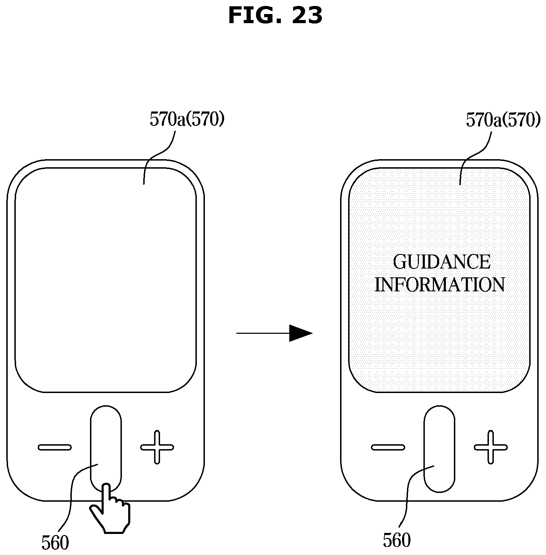

FIG. 23 illustrates an occasion when a cleaner outputs guidance information based on a certain condition according to an embodiment of the disclosure.

Referring to FIG. 23, the cleaner 5 may output the guidance information based on power on.

In an embodiment of the disclosure, the controller 530 of the cleaner 5 may control the output interface 570 to output the guidance information based on the cleaner 5 being powered on. The cleaner 5 being powered on may refer to receiving a user input to power on through the input interface 560.

The controller 530 of the cleaner 5 may receive a command to power on the cleaner 5 through the input interface 560.

The controller 530 of the cleaner 5 may control the output interface 570 to output the guidance information in response to reception of the command to power on the cleaner 5 through the input interface 560.

According to an embodiment of the disclosure, when the user wants to use the cleaner 5 and powers on the cleaner 5, the guidance information may be output, and thus, the user may immediately check what zone needs to be cleaned.

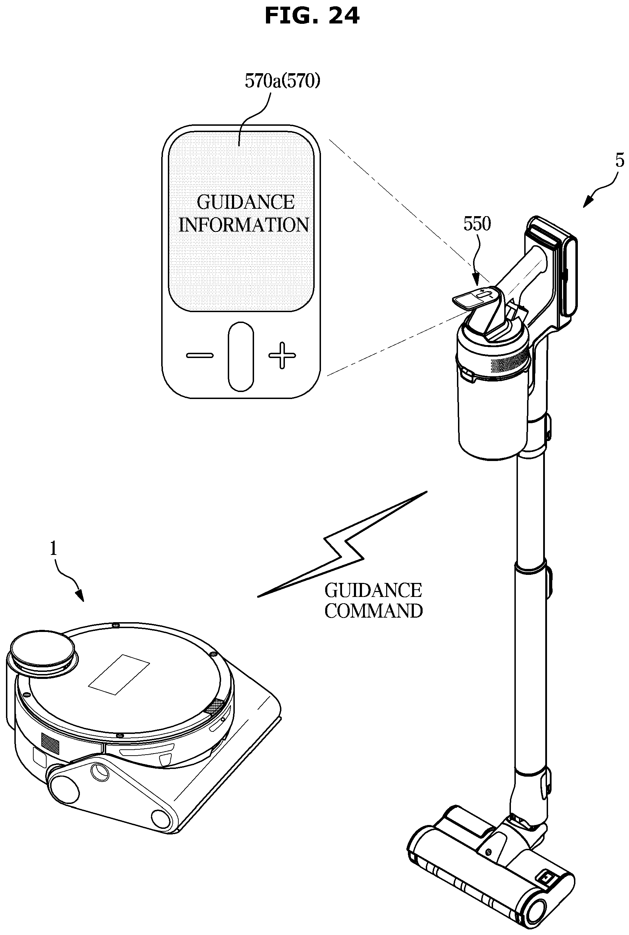

FIG. 24 illustrates an occasion when a cleaner outputs guidance information based on a certain condition according to an embodiment of the disclosure.

Referring to FIG. 24, the cleaner 5 may output the guidance information based on reception of a guidance command from an external device. Although the external device is shown as being the robot cleaner 1, the external device is not limited thereto.

In various embodiments of the disclosure, the robot cleaner 1 may output sensory information (e.g., visual information and/or auditory information) asking an intent of the user to clean a non-cleaned zone through the output interface 62 based on occurrence of the non-cleaned zone. For example, the robot cleaner 1 may output a sound asking an intent to clean the non-cleaned zone through the speaker 80 based on occurrence of the non-cleaned zone.

The robot cleaner 1 may check the intent of the user through the input interface 61. Specifically, the robot cleaner 1 may check a response of the user to the sensory information asking the intent to clean the non-cleaned zone through the input interface 61.

For example, the robot cleaner 1 may receive a voice corresponding to an answer of the user through the microphone 70.

The robot cleaner 1 may transmit the guidance command to the cleaner 5 according to one of the various routes as described above in connection with FIGS. 17 to 21, based on reception of a positive response of the user through the input interface 61.

In various embodiments of the disclosure, the user equipment 2 may output sensory information (e.g., visual information, tactile information and/or auditory information) asking an intent to clean the non-cleaned zone based on reception of information about the non-cleaned zone.

The user equipment 2 may transmit a guidance command to the cleaner 5 based on reception of a positive response of the user.

According to an embodiment of the disclosure, when the user intends to clean the non-cleaned zone with the cleaner 5, the guidance command may be transmitted to the cleaner 5, and the guidance information may be automatically output by the cleaner 5.

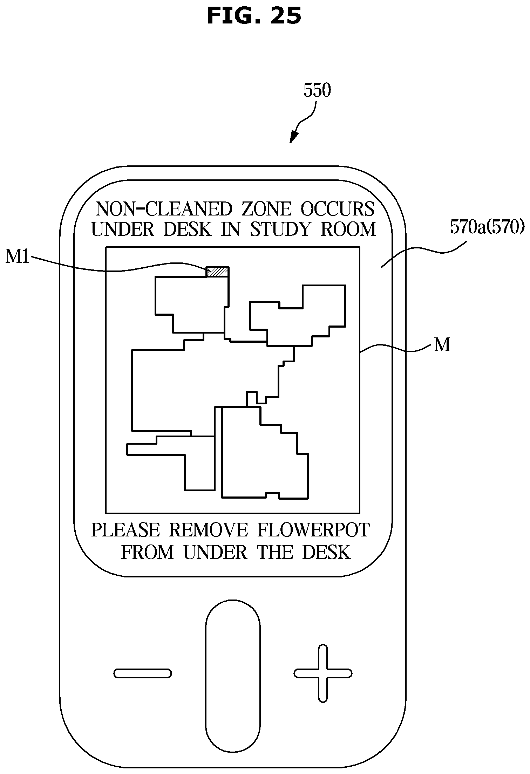

FIG. 25 illustrates guidance information output by a cleaner according to an embodiment of the disclosure.

The guidance information output by the cleaner 5 may include information notifying the user of a non-cleaned zone M1. Furthermore, the guidance information may include information for leading the user to the non-cleaned zone M1.

For example, the guidance information may include at least one of a location of the non-cleaned zone M1, a name of a room where the non-cleaned zone M1 is located or a cause of occurrence of the non-cleaned zone M1. Providing the location of the non-cleaned zone M1 may include providing an imaginary line connecting the starting point of the cleaner 5 set by the user to the location of the non-cleaned zone M1 on the cleaning map M.

Referring to FIG. 25, it may be seen that guidance information is output on the output interface 570 (e.g., the display 570a) of the cleaner 5.

The guidance information may include the location of the non-cleaned zone M1 on the cleaning map M.

As the location of the non-cleaned zone M1 is displayed on the cleaning map M, the user may intuitively identify the location of the non-cleaned zone M1. The location of the non-cleaned zone M1 may be identified by a visual indicator (e.g., shade, figure, icon, text, or the like) that distinguishes the non-cleaned zone M1 from a cleaned zone. For example, the location corresponding to the non-cleaned zone M1 may be darker than in a location corresponding to the cleaned zone.

The guidance information may include the name of the room where the non-cleaned zone M1 is located. For example, when the non-cleaned zone M1 occurs in a room set by the user as a 'study room', the guidance information may include an indicator (e.g., text, animation, icons, or the like) that may indicate the 'study room'.

The guidance information may include a cause of occurrence of the non-cleaned zone M1. For example, when an entrance failure of the robot cleaner 1 due to a flowerpot under a desk causes the non-cleaned zone M1, the guidance information may include an indicator that may indicate the cause.

In various embodiments of the disclosure, the guidance information may include a solution to resolve the cause of occurrence of the non-cleaned zone M1. For example, when an entrance failure of the robot cleaner 1 due to a flowerpot under a desk causes the non-cleaned zone M1, the guidance information may include an indicator requesting removal of the flowerpot from under the desk.

In various embodiments of the disclosure, the cleaner 5 may recommend optimal placement of the obstacle that is a cause of the occurrence of the non-cleaned zone M1 through the output interface 570. For example, the cleaner 5 may recommend an optimal placement of a flowerpot when the cause of the occurrence of the non-cleaned zone M1 is the flowerpot.

According to an embodiment of the disclosure, when the user intends to perform cleaning with the manual cleaner 5, the user may be guided directly to the non-cleaned zone M1 requiring to be cleaned.

Along with this, in the disclosure, as the guidance information is output through the output interface 570 of the cleaner 5, the user may check the non-cleaned zone M1 while holding and moving the cleaner 5.

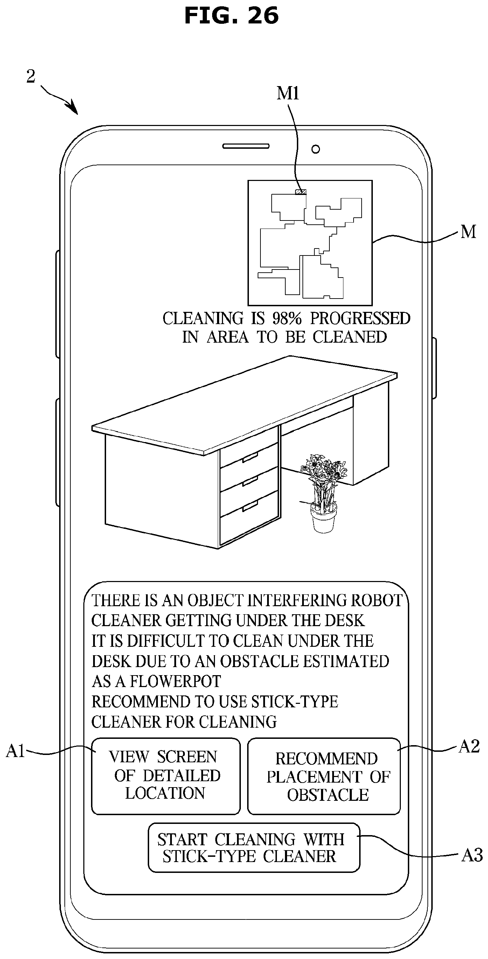

FIG. 26 illustrates a screen output on a user equipment when there is a non-cleaned zone M1 according to an embodiment of the disclosure.

Referring to FIG. 26, the user equipment 2 may output guidance information to the non-cleaned zone M1 based on reception of information about the non-cleaned zone M1 from the robot cleaner 1.

In an embodiment of the disclosure, the user equipment 2 may receive the information about the non-cleaned zone M1 from the robot cleaner 1 through the server 3 or receive the information about the non-cleaned zone M1 directly from the robot cleaner 1.

As described above, the guidance information to the non-cleaned zone M1 may include at least one of a location of the non-cleaned zone M1, a name of a room where the non-cleaned zone M1 is located or a cause of occurrence of the non-cleaned zone M1.

In various embodiments of the disclosure, the guidance information may include an indicator for recommending to use the cleaner 5 to clean the non-cleaned zone M1.

The user equipment 2 may output the indicator (e.g., a visual indicator, a tactile indicator and/or an auditory indicator) for recommending to use the cleaner 5 to clean the non-cleaned zone M1 based on reception of the information about the non-cleaned zone M1 from the robot cleaner 1.

In various embodiments of the disclosure, the user equipment 2 may display a user interface element A1 (hereinafter, referred to as a UI element) to check a detailed location of the non-cleaned zone M1 and/or a UI element A2 for providing a solution to resolve the cause of the occurrence of the non-cleaned zone M1.

The user equipment 2 may display the location of the non-cleaned zone M1 on the cleaning map M based on selecting of the UI element A1 for checking the detailed location of the non-cleaned zone M1.

The user equipment 2 may provide the solution to resolve the cause of the occurrence of the non-cleaned zone M1 based on selecting of the UI element A2 for providing the solution to resolve the cause of occurrence of the non-cleaned zone M1. In various embodiments of the disclosure, the user equipment 2 may recommend optimal placement of an obstacle that is a cause of the occurrence of the non-cleaned zone M1.

For example, the user equipment 2 may recommend optimal placement of a flowerpot when the cause of the occurrence of the non-cleaned zone M1 is the flowerpot.

In various embodiments of the disclosure, the user equipment 2 may display a UI element A3 for determining whether the user intends to use the cleaner 5 to clean the non-cleaned zone M1.

The user equipment 2 may transmit a guidance command to the cleaner 5 based on selecting of the UI element A3 for determining whether the user intends to use the cleaner 5 to clean the non-cleaned zone M1.

In an embodiment of the disclosure, the user equipment 2 may transmit a guidance command to the cleaner 5 through the server 3 and the docking station 6, transmit the guidance command to the cleaner 5 through the server 3, or transmit the guidance command directly to the cleaner 5.

The cleaner 5 may output guidance information based on reception of the guidance command.

According to an embodiment of the disclosure, the user may check the information about the non-cleaned zone M1 remotely.

According to an embodiment of the disclosure, the user may output the guidance information to the cleaner 5 when there is an intent of the user to clean the non-cleaned zone M1 with the cleaner 5.

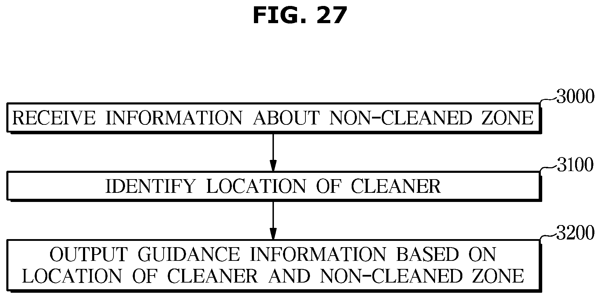

FIG. 27 is a flowchart illustrating a procedure for a cleaner to output guidance information according to an embodiment of the disclosure.

Referring to FIG. 27, the cleaner 5 may receive information about the non-cleaned zone M1, in operation 3000. Operation 3000 corresponds to operation 2000 of FIG. 16, so an overlapping description will not be repeated.

The cleaner 5 may identify the location of the cleaner 5, in operation 3100.

The controller 530 may identify the location of the cleaner 5 based on data and/or information received through the sensor 520.

In an embodiment of the disclosure, the controller 530 may identify the location of the cleaner 5 based on image information obtained from the camera 520a.

The information about the non-cleaned zone M1 received from an external device may include information (e.g., image information) about the cleaning map M. The information about the cleaning map M may include location information of an object placed in the space to be cleaned.

The controller 530 may identify an object in an image based on image information obtained from the camera 520a, and estimate a location of the cleaner 5 based on location information of the identified object and things placed in the space to be cleaned. Identifying the object in the image may include identifying a type, a direction, or the like, of the object.

For example, when a television and a refrigerator are identified in the image obtained from the camera 520a, the location of the cleaner 5 may be estimated by taking into account locations of the television and the refrigerator on the cleaning map M and an FoV of the camera 520a.

In an embodiment of the disclosure, the location of the cleaner 5 may be identified based on inertial information obtained from the IMU 520b.

When a departure location (starting point) of the cleaner 5 on the cleaning map M is known, it is possible to track the location of the cleaner 5 based on the inertial information by dead reckoning.

The controller 530 may estimate the location of the cleaner 5 by dead reckoning based on the inertial information with respect to a preset starting point. With the dead reckoning, the more often the cleaner 5 moves, the bigger the error in location of the cleaner 5. Accordingly, the controller 530 may initialize the location of the cleaner 5 estimated based on the inertial information in response to a certain condition satisfied.

For example, the controller 530 may initialize the location of the cleaner 5 estimated by dead reckoning based on the cleaner 5 docked in the docking station 6.

The controller 530 may start estimating the location of the cleaner 5 by dead reckoning based on the inertial information based on the cleaner 5 separated from the docking station 6.

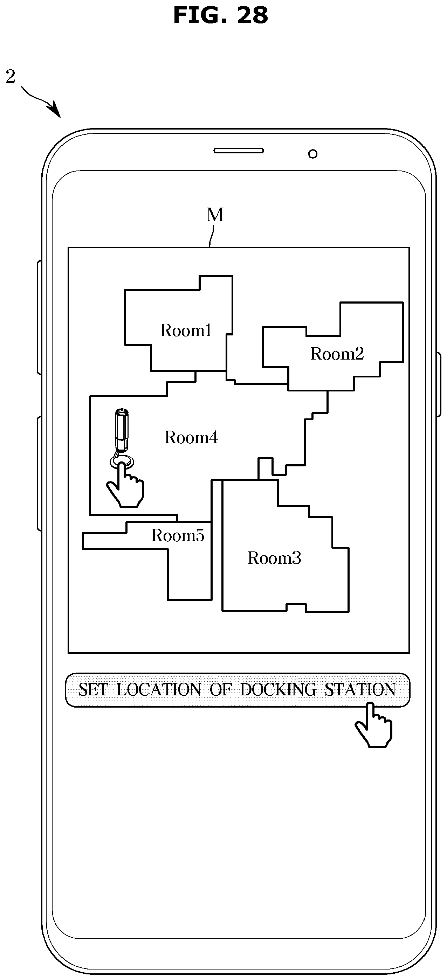

FIG. 28 illustrates a screen for initial settings for identifying a location of a cleaner according to an embodiment of the disclosure.

Referring to FIG. 28, the user equipment 2 may provide a UI element for setting a location of the docking station 6 on the cleaning map M.

As the user who uses the cleaner 5 mainly holds and moves the cleaner 5 from the docking station 6, the location of the docking station 6 corresponds to a location at which the cleaner 5 starts to move.

The user may set the location of the docking station 6 on the cleaning map M through the user equipment 2.

The user equipment 2 may update the cleaning map M so that the location of the docking station 6 is set, and send the updated cleaning map M to the robot cleaner 1, the server 3, the cleaner 5 and/or the docking station 6.

In various embodiments of the disclosure, it is obvious that the UI element for setting the location of the docking station 6 may be provided through the output interface 570 of the cleaner 5.

The user may set the location of the docking station 6 on the cleaning map M through the user interface 550 of the cleaner 5.

The cleaner 5 may update the cleaning map M so that the location of the docking station 6 is set, and send the updated cleaning map M to the robot cleaner 1, the user equipment 2, the server 3 and/or the docking station 6.

In various embodiments of the disclosure, it is obvious that the UI element for setting the location of the docking station 6 may be provided through the output interface 692 of the docking station 6.

The user may set the location of the docking station 6 on the cleaning map M through the user interface 690 of the docking station 6.

The docking station 6 may update the cleaning map M so that the location of the docking station 6 is set, and send the updated cleaning map M to the robot cleaner 1, the user equipment 2, the server 3 and/or the cleaner 5.

In various embodiments of the disclosure, the controller 530 may identify the location of the cleaner 5 based on sensor fusion data.

For example, the controller 530 may identify the location of the cleaner 5 based on the image data obtained from the camera 520a and inertia data obtained from the IMU 520b.

The controller 530 may identify an accurate location of the cleaner 5 based on the location of the cleaner 5 identified based on the image information obtained from the camera 520a and the location of the cleaner 5 identified based on the inertial information obtained from the IMU 520b.

The location of the cleaner 5 identified based on the inertial information is more accurate when a traveled distance of the cleaner 5 right after the cleaner 5 is separated from the docking station 6 is smaller than a certain distance, and as time progresses, the location of the cleaner 5 identified based on the image information obtained from the camera 520a is more accurate.

The controller 530 may correct the location of the cleaner 5 identified based on the inertial information to the location of the cleaner 5 identified based on the image information obtained from the camera 520a at certain time intervals.

According to an embodiment of the disclosure, the location of the cleaner 5 may be identified more accurately based on the sensor fusion data.

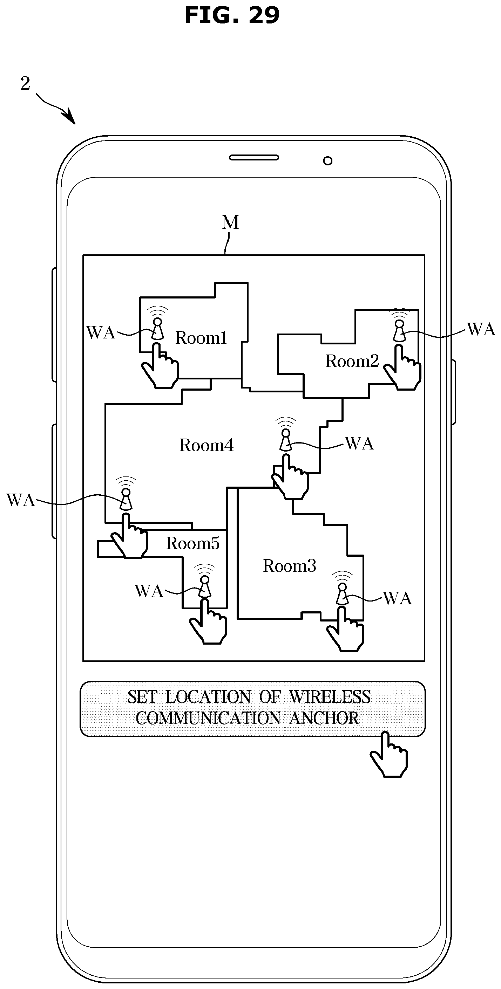

FIG. 29 illustrates a screen for initial settings for identifying a location of a cleaner according to an embodiment of the disclosure.

Referring to FIG. 29, in various embodiments of the disclosure, the controller 530 may receive location information of the cleaner 5 from an external device. For the external device to identify the location of the cleaner 5, the cleaner 5 may include the radio communication tag 520d.

A plurality of wireless communication anchors may be installed beforehand in the space corresponding to the cleaning map M. The user may place the plurality of wireless communication anchors in the space corresponding to the cleaning map M, and set the locations of the wireless communication anchors through the user equipment 2, the cleaner 5 and/or the docking station 6.

As described above, the radio communication tag 520d may transmit a wireless signal (e.g., UWB signal), and the wireless communication anchor may receive the wireless signal output from the radio communication tag 520d.

Referring to FIG. 29, the user equipment 2 may provide a UI element for setting a location of the wireless communication anchor WA on the cleaning map M.

The user may set the location of the docking station WA on the cleaning map M through the user equipment 2. For example, the user may place the wireless communication anchor WA on the cleaning map M by selecting the location at which the wireless communication anchor WA is placed on the cleaning map M.

The user equipment 2 may update the cleaning map M so that the location of the wireless communication anchor WA is set, and send the updated cleaning map M to the robot cleaner 1, the server 3, the cleaner 5 and/or the docking station 6.

In various embodiments of the disclosure, it is obvious that the UI element for setting the location of the wireless communication anchor WA may be provided through the output interface 570 of the cleaner 5.

The user may set the location of the wireless communication anchor WA on the cleaning map M through the user interface 550 of the cleaner 5.

The cleaner 5 may update the cleaning map M so that the location of the wireless communication anchor WA is set, and send the updated cleaning map M to the robot cleaner 1, the user equipment 2, the server 3 and/or the docking station 6.

In various embodiments of the disclosure, it is obvious that the UI element for setting the location of the wireless communication anchor WA may be provided through the output interface 692 of the docking station 6.

The user may set the location of the wireless communication anchor WA on the cleaning map M through the user interface 690 of the docking station 6.

The docking station 6 may update the cleaning map M so that the location of the wireless communication anchor WA is set, and send the updated cleaning map M to the robot cleaner 1, the user equipment 2, the server 3 and/or the cleaner 5.

The wireless communication anchor WA may identify a distance between the wireless communication anchor WA and a radio communication tag 520d based on a signal output from the radio communication tag 520d. When there are at least three of the wireless communication anchors WA capable of receiving the signal output from the radio communication tag 520d, the location of the radio communication tag 520d (i.e., the location of the cleaner 5) may be identified based on the distance to the identified radio communication tag 520d from each wireless communication anchor WA.

The wireless communication anchor WA may include a communication module for receiving the signal (e.g., UWB signal) output from the radio communication tag 520d and a communication module for communicating with the external device.

In various embodiments of the disclosure, the plurality of wireless communication anchors WA may be synchronized with one another to communicate with each other. Accordingly, a wireless communication anchor set as a master anchor among the plurality of wireless communication anchors may identify the location of the radio communication tag 520d based on the distance to the identified radio communication tag 520d from each wireless communication anchor WA. The wireless communication anchor set as the master anchor may send information about the location of the radio communication tag 520d to the cleaner 5 through various routes. For example, the wireless communication anchor set as the master anchor may send the location information of the cleaner 5 to the cleaner 2 directly, through the docking station 6, through the server 3, through the server 3 and the docking station 6, or through the user equipment 2.

In various embodiments of the disclosure, each of the plurality of wireless communication anchors WA may send information about a distance to the identified radio communication tag 520d from each wireless communication anchor WA to the robot cleaner 1, the user equipment 2, the server 3, the cleaner 5 and/or the docking station 6.

In various embodiments of the disclosure, when the cleaner 5 includes the radio communication tag 520d, an entity for identifying the location of the cleaner 5 may be the wireless communication anchor WA, the robot cleaner 1, the user equipment 2, the server 3, the cleaner 5 and/or the docking station 6.

In an embodiment of the disclosure, the robot cleaner 1, the user equipment 2, the server 3 and/or the docking station 6 may identify a location of the radio communication tag 520d (a location of the cleaner 5) based on the distance to the identified radio communication tag 520d from each wireless communication anchor WA, and send the location information of the cleaner 5 to the cleaner 5 along various routes.

In an embodiment of the disclosure, the cleaner 5 may identify the location of the wireless communication tag 520d (the location of the cleaner 5) based on the distance to the identified radio communication tag 520d from each wireless communication anchor WA. The controller 530 may identify the location of the radio communication tag 520d based on the information about a distance to the identified radio communication tag 520d from each wireless communication anchor WA received through the communicator 545.

According to an embodiment of the disclosure, as an accurate location of the cleaner 5 may be identified, more specific guidance information may be provided.

Turning back to FIG. 27, the cleaner 5 may output the guidance information based on the location of the cleaner 5 and the location of the non-cleaned zone M1, in operation 3200. The guidance information may include information about a route to reach the location of the non-cleaned zone M1 from the location of the cleaner 5.

The controller 530 may generate the route information based on the location of the cleaner 5 and the location of the non-cleaned zone M1. The route information may include navigation information for guiding the cleaner 5 to the location of the non-cleaned zone M1 from the location of the cleaner 5.

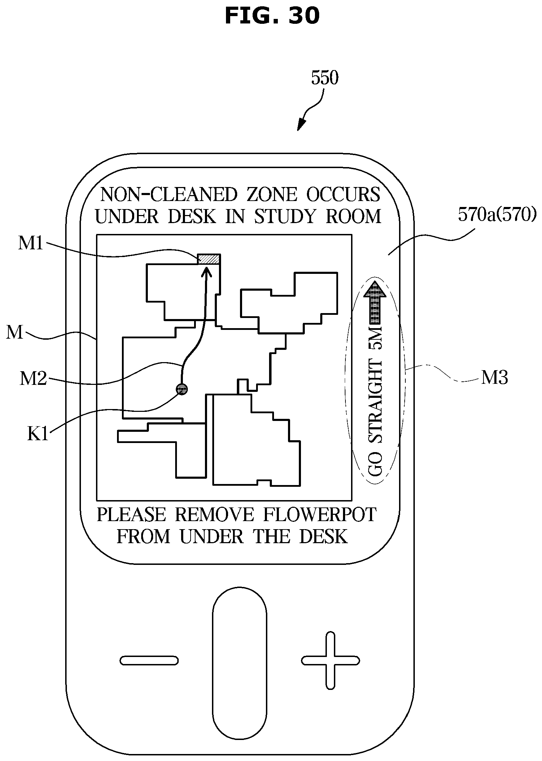

FIG. 30 illustrates guidance information output by a cleaner according to an embodiment of the disclosure.

Referring to FIG. 30, the controller 530 may control the output interface 570 (e.g., the display 570a) to output the guidance information.

In an embodiment of the disclosure, the guidance information may include location information K1 of the cleaner 5 on the cleaning map M and the location information of the non-cleaned zone M1 on the cleaning map M.

In various embodiments of the disclosure, the location of the cleaner 5 on the cleaning map M and the location of the non-cleaned zone M1 on the cleaning map M may be connected to each other by an imaginary line M2.

The location information K1 of the cleaner 5 on the cleaning map M may be updated in real time. As the location information K1 of the cleaner 5 is updated in real time, the imaginary line M2 may be updated in real time as well.

According to an embodiment of the disclosure, providing a route of the cleaner 5 may not only give the user an interest to find the way to the non-cleaned zone M1 but also lead the way more accurately.

According to an embodiment of the disclosure, providing the route of the cleaner 5 may make it easy for the user to find the way to the non-cleaned zone M1.

In an embodiment of the disclosure, the guidance information may include turn-by-turn (TBT) information M3 for the cleaner 5 to reach the non-cleaned zone M1.

The TBT information M3 may include direction information (e.g., all directions, such as straight, left turn, right turn, reverse and/or at 11 o'clock) corresponding to the route.

The TBT information M3 may be output through the output interface 570 as sensory information (e.g., visual information, such as text, figure, indicator, or the like, auditory information, such as voice, sound, or the like, and/or tactile information, such as vibration or shape change).

For example, the TBT information may be provided as an indicator (e.g., an arrow shape, text, or the like) indicating a direction corresponding to the route, without being limited thereto.

In various embodiments of the disclosure, the TBT information M3 may further include distance information to travel in the corresponding direction. For example, the TBT information may include information indicating '5 m' to travel straight.

According to an embodiment of the disclosure, the user may intuitively check the route for the user to go to clean the non-cleaned zone M1.

The guidance information is not limited to what are described above, and all types of information for guiding the cleaner 5 to the non-cleaned zone M1 based on the location information K1 of the cleaner 5 and the location information of the non-cleaned zone M1 may correspond to the guidance information.

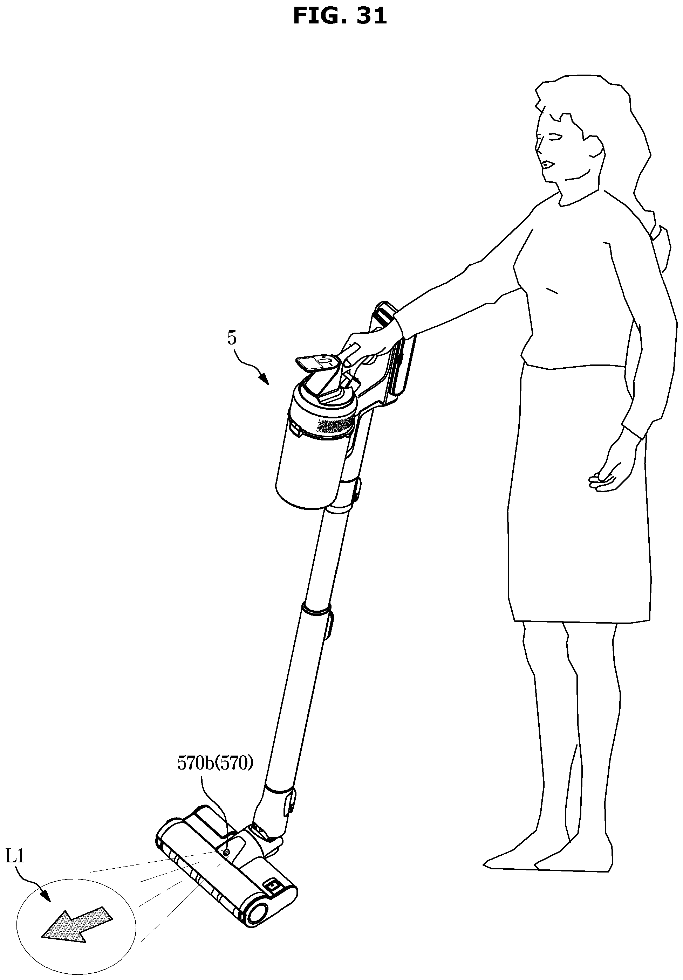

FIG. 31 illustrates guidance information output by a cleaner according to an embodiment of the disclosure.

Referring to FIG. 31, the controller 530 may control the output interface (e.g., emitter 570b) to output the guidance information.

The emitter 570b may project guidance information L1 onto the ground around the cleaner 5 or an object in front of the cleaner 5.

The guidance information L1 may include route information, but is not limited thereto. In various embodiments of the disclosure, the guidance information L1 may include TBT information. When the TBT information is projected onto the ground or the front object, the user may intuitively recognize a traveling direction of the cleaner 5.

In various embodiments of the disclosure, the guidance information L1 may include at least one of a location of the non-cleaned zone M1, a name of a room where the non-cleaned zone M1 is located or a cause of occurrence of the non-cleaned zone M1.

The user may move to the non-cleaned zone M1 based on the guidance information L1 projected onto the ground or the object in front of the cleaner 5.

According to an embodiment of the disclosure, projecting a route of the cleaner 5 onto the surface of the ground or the front object may give the user an interest to find the way to the non-cleaned zone M1.

According to an embodiment of the disclosure, providing the route of the cleaner 5 on the surface of the ground or the front object may make it easy for the user to find the way to the non-cleaned zone M1.

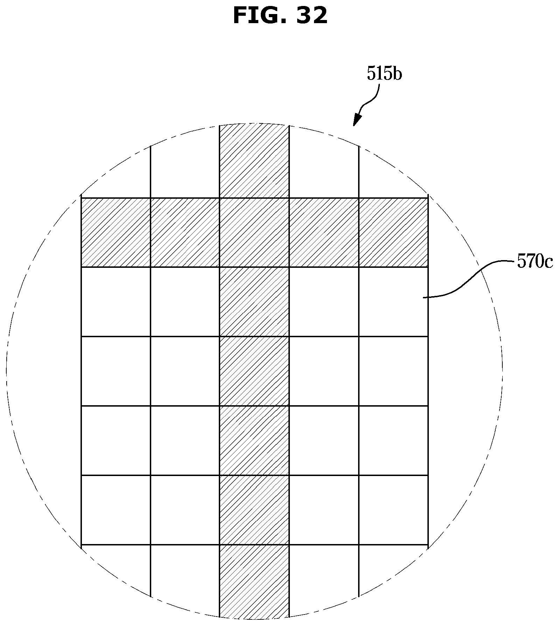

FIG. 32 illustrates guidance information output by a cleaner according to an embodiment of the disclosure.

Referring to FIG. 32, the controller 530 may control the output interface 570 (e.g., the variable element 570c) to output the guidance information.

The variable element 570c may be arranged on the bottom surface 515b of the handle 515, but is not limited thereto.

The variable element 570c may include a plurality of elements that are changing in shape according to an electric signal.

In various embodiments of the disclosure, the variable element 570c may be changed in form into a swollen form and a sunken form.

The guidance information L1 may include route information, but is not limited thereto. In various embodiments of the disclosure, the guidance information L1 may include TBT information. The TBT information may be output by the variable element as tactile information. The tactile information may include figure information and/or braille information corresponding to the TBT information.

For example, when the variable elements 570c corresponding to straight arrow forms are changed into a swollen form and the other variable elements 570c remain in a sunken form, the user may detect the straight arrow form based on the touched feeling of a hand that holds the handle.

In another example, when the variable elements 570c corresponding to braille having the meaning of 'go straight' are changed into a swollen form and the other variable elements 570c remain in a sunken form, the user may detect the braille and recognize the meaning.

In various embodiments of the disclosure, the guidance information L1 may include at least one of a location of the non-cleaned zone M1, a name of a room where the non-cleaned zone M1 is located or a cause of occurrence of the non-cleaned zone M1.

The user may move to the non-cleaned zone M1 based on the tactile information felt by the hand that holds the handle 515.

According to an embodiment of the disclosure, the tactile information may give the user an interest to find the way to the non-cleaned zone M1.

According to an embodiment of the disclosure, people unable to recognize visual information (e.g., the blind) may easily find the way to the non-cleaned zone M1, thereby efficiently performing cleaning.

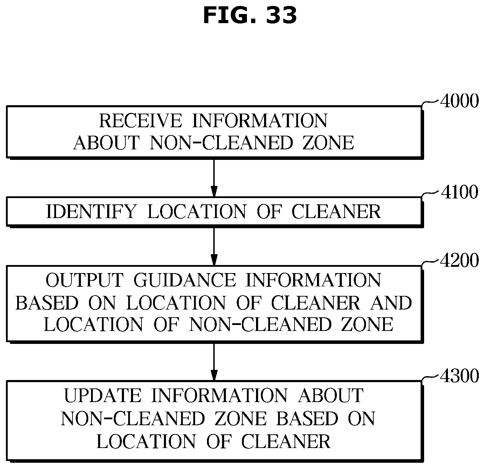

FIG. 33 is a flowchart illustrating a procedure of updating information about a non-cleaned zone based on a location of a cleaner according to an embodiment of the disclosure.

Referring to FIG. 33, the cleaner 5 may receive information about the non-cleaned zone M1, in operation 4000. Operation 4000 corresponds to operation 3000 of FIG. 27, so an overlapping description will not be repeated. The cleaner 5 may identify the location of the cleaner 5, in operation 4100. Operation 4100 corresponds to operation 3100 of FIG. 27, so an overlapping description will not be repeated. The cleaner 5 may output guidance information based on the location of the cleaner 5 and the location of the non-cleaned zone M1, in operation 4200. Operation 4200 corresponds to operation 3200 of FIG. 27, so an overlapping description will not be repeated.

In various embodiments of the disclosure, based on arrival of the cleaner 5 at the non-cleaned zone M1, the controller 530 may output an arrival notification message through the output interface 570. The arrival notification message may correspond to an example of the guidance information. The arrival notification message may be sent to the user equipment 2 through the communicator 545 in various routes and output through the user equipment 2.

The robot cleaner 1, the user equipment 2, the server 3, the cleaner 5 and/or the docking station 6 may update the information about the non-cleaned zone M1 based on the location of the cleaner 5, in operation 4300.

In an embodiment of the disclosure, the cleaner 5 may update the information about the non-cleaned zone M1 based on the location of the cleaner 5.

In another embodiment of the disclosure, the controller 530 of the cleaner 5 may determine whether the cleaner 5 has accessed the non-cleaned zone M1 based on the location of the cleaner 5. For example, the controller 530 may determine that the cleaner 5 has accessed the non-cleaned zone M1 based on arrival of the cleaner 5 near the non-cleaned zone M1 (e.g., within a certain distance). Based on access of the cleaner 5 to the non-cleaned zone M1, the controller 530 may transmit a signal notifying the external device (e.g., the robot cleaner 1, the user equipment 2, the server 3 and/or the docking station 6) that the cleaner 5 has accessed the non-cleaned zone M1.

In various embodiments of the disclosure, the controller 530 may operate the suction device 540 based on arrival of the cleaner 5 at or near the non-cleaned zone M1. In another example, the controller 530 may turn off the suction device 540 based on the cleaner 5 receding from the non-cleaned zone M1 or receding a certain distance away from the non-cleaned zone M1.

In various embodiments of the disclosure, based on arrival of the cleaner 5 at or near the non-cleaned zone M1, the controller 530 may control the motor 514a to increase suction force of the suction device 540. In another example, the controller 530 may control the motor 514a to reduce suction force of the suction device 540 based on the cleaner 5 receding from the non-cleaned zone M1 or receding a certain distance away from the non-cleaned zone M1.

The controller 530 may determine whether the cleaner 5 has completed cleaning on the non-cleaned zone M1 based on the location of the cleaner 5. For example, the controller 530 may determine that the cleaner 5 has completed cleaning on the non-cleaned zone M1 based on the location of the cleaner 5 overlapping with the location of the non-cleaned zone M1 for a certain period of time (e.g., 0 to 1 seconds). For example, the controller 530 may determine that the cleaner 5 has completed cleaning on the non-cleaned zone based on the cleaner 5 passing and cleaning the non-cleaned zone.

In another example, the controller 530 may determine that cleaning on the non-cleaned zone M1 has been completed based on the cleaner 5 having been located near (within a certain distance from) the non-cleaned zone M1 for a certain period of time even though the location of the cleaner 5 does not overlap the location of the non-cleaned zone M1.

Updating the information about the non-cleaned zone M1 may include updating the cleaning map M. Updating the information about the non-cleaned zone M1 may include changing a portion corresponding to the non-cleaned zone M1 on the cleaning map M to a cleaned zone based on the cleaner 5 completing cleaning on the non-cleaned zone M1.

The controller 530 may update the non-cleaned zone M1 to a cleaned zone based on completion of cleaning on the non-cleaned zone M1.

In various embodiments of the disclosure, based on completion of cleaning on the non-cleaned zone M1, the cleaner 5 may transmit a signal notifying the external device (e.g., the robot cleaner 1, the user equipment 2, the server 3 and/or the docking station 6) that cleaning on the non-cleaned zone M1 has been completed.

In an embodiment of the disclosure, based on completion of cleaning on the non-cleaned zone M1, the controller 530 may control the communicator 545 to transmit a signal notifying the external device (e.g., the robot cleaner 1, the user equipment 2, the server 3 and/or the docking station 6) that cleaning on the non-cleaned zone M1 has been completed.

The robot cleaner 1, the user equipment 2, the server 3 and/or the docking station 6 may update the information about the non-cleaned zone M1 based on reception of the signal to notify that cleaning on the non-cleaned zone M1 has been completed.

In an embodiment of the disclosure, the cleaner 5 may transmit location information of the cleaner 5 to the external device (e.g., the robot cleaner 1, the user equipment 2, the server 3 and/or the docking station 6) in real time.

The external device (e.g., the robot cleaner 1, the user equipment 2, the server 3 and/or the docking station 6) may update the information about the non-cleaned zone M1 based on the location information of the cleaner 5. For example, the external device (e.g., the robot cleaner 1, the user equipment 2, the server 3 and/or the docking station 6) may determine whether the cleaner 5 has completed cleaning on the non-cleaned zone M1 based on the location of the cleaner 5, and update the non-cleaned zone M1 to a cleaned zone based on completion of cleaning on the non-cleaned zone M1.

According to an embodiment of the disclosure, as the information about the non-cleaned zone M1 stored in the robot cleaner 1, the user equipment 2, the server 3, the cleaner 5 and/or the docking station 6 is updated, the user may check an accurate cleaning state of the space to be cleaned in real time.

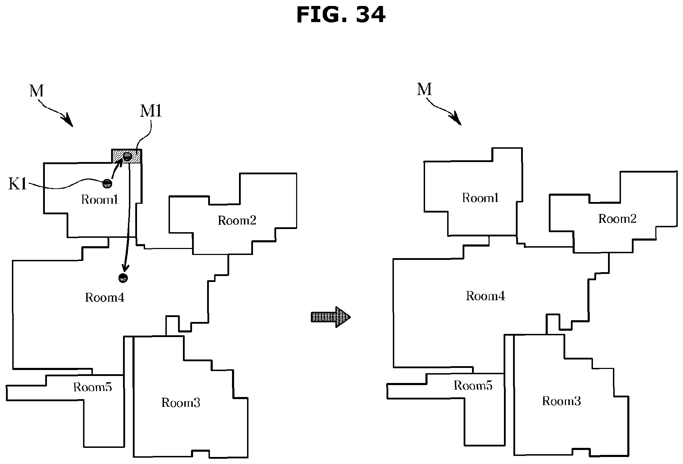

FIG. 34 illustrates updating of information about a non-cleaned zone based on a location of a cleaner according to an embodiment of the disclosure.

Referring to FIG. 34, it may be seen that the cleaning map M is updated based on a location K1 of the cleaner 5 overlapping with the location of the non-cleaned zone M1.

A portion corresponding to the location of the non-cleaned zone M1 on the cleaning map M is marked and displayed as the non-cleaned zone M1, and based on completion of cleaning on the non-cleaned zone M1, may be displayed as a cleaned zone.

Update information of the non-cleaned zone M1 may be stored in the robot cleaner 1, the user equipment 2, the server 3, the cleaner 5 and/or the docking station 6.

According to an embodiment of the disclosure, the user may feel interest in removing the non-cleaned zone M1 by using the cleaner 5.

According to an embodiment of the disclosure, the user may have more fun in performing cleaning that is otherwise boring.

In an embodiment of the disclosure, a cleaner may include an output interface; a communicator; and a controller configured to receive information about a non-cleaned zone obtained by a robot cleaner through the communicator, and control the output interface to output guidance information to guide the cleaner to the non-cleaned zone based on the information about the non-cleaned zone.

The information about the non-cleaned zone may be received by the cleaner from an external device through the communicator.

The external device may include at least one of a server, a user equipment, the robot cleaner or a docking station.

In an embodiment of the disclosure, a cleaner may include an output interface; a communicator; and a controller configured to receive information about a non-cleaned zone from an external device through the communicator, and control the output interface to output guidance information to guide the cleaner to the non-cleaned zone based on the information about the non-cleaned zone.

In an embodiment of the disclosure, the controller may control the output interface to output the guidance information based on the cleaner separated from the docking station.

In an embodiment of the disclosure, the controller may control the output interface to output the guidance information based on the cleaner powered on.

In an embodiment of the disclosure, the controller may control the output interface to output guidance information based on reception of a guidance command from the external device through the communicator.

In an embodiment of the disclosure, the cleaner may further include at least one sensor for obtaining information relating to a location of the cleaner.

In an embodiment of the disclosure, the controller may identify a location of the cleaner based on the information obtained from the at least one sensor.

In an embodiment of the disclosure, the controller may control the output interface to output information about a route to reach a location of the non-cleaned zone from a location of the cleaner as the guidance information based on the location of the cleaner and the location of the non-cleaned zone.

In an embodiment of the disclosure, the at least one sensor may include a camera.

In an embodiment of the disclosure, the controller may identify a location of the cleaner based on image information obtained from the camera.

In an embodiment of the disclosure, the at least one sensor may include an IMU.

In an embodiment of the disclosure, the controller may identify a location of the cleaner based on inertial information obtained from the IMU.

In an embodiment of the disclosure, the cleaner may further include a radio communication tag capable of communicating with a plurality of wireless communication anchors placed at preset locations.

In an embodiment of the disclosure, the controller may control the output interface to output information about a route to reach a location of the non-cleaned zone from a location of the cleaner as the guidance information based on the location of the cleaner identified based on a signal output from the radio communication tag and received through each of the plurality of wireless communication anchors.

In an embodiment of the disclosure, the rout information may include location information of the cleaner on a cleaning map and location information of the non-cleaned zone on the cleaning map.

In an embodiment of the disclosure, the route information may include TBT information for the cleaner to reach the non-cleaned zone.

In an embodiment of the disclosure, the controller may control the communicator to transmit a signal for notifying the external device that cleaning on the non-cleaned zone is completed based on the cleaner completing cleaning on the non-cleaned zone.

In an embodiment of the disclosure, the controller may update the information about the non-cleaned zone based on the location of the cleaner.

In an embodiment of the disclosure, the guidance information may include at least one of a location of the non-cleaned zone, a name of a room in which the non-cleaned zone is located or a cause of occurrence of the non-cleaned zone.

In an embodiment of the disclosure, the information about the non-cleaned zone may be obtained by a robot cleaner.

In an embodiment of the disclosure, the output interface may include at least one of an emitter, a display, a speaker, a piezo-electric element or a variable element.

In an embodiment of the disclosure, the external device may include at least one of a server, a user equipment, a robot cleaner or a docking station.

In an embodiment of the disclosure, the communicator may receive the information about the non-cleaned zone from at least one of the docking station or the robot cleaner through Bluetooth communication.

In an embodiment of the disclosure, the communicator may receive the information about the non-cleaned zone from the server or the user equipment through Wi-Fi communication.

In an embodiment of the disclosure, the communicator may receive the information about the non-cleaned zone from the external device based on at least one of the cleaner being charged, the cleaner powered on or the cleaner separated from the docking station.

In an embodiment of the disclosure, the cleaner may be a manual cleaner including a grippable handle.

According to an embodiment of the disclosure, a method of controlling a cleaner may include receiving information about a non-cleaned zone from an external device; and outputting guidance information to guide the cleaner to the non-cleaned zone based on the information about the non-cleaned zone.

The outputting of the guidance information may be performed based on the cleaner separated from a docking station.

The outputting of the guidance information may be performed based on the cleaner powered on.

The outputting of the guidance information may be performed based on reception of a guidance command from the external device through the communicator.

The method may further include identifying a location of the cleaner based on information obtained from at least one sensor, and the outputting of the guidance information may include outputting information about a route to reach a location of the non-cleaned zone from the location of the cleaner based on the location of the cleaner and the location of the non-cleaned zone.

The at least one sensor may include a camera, and the identifying of the location of the cleaner based on the information obtained from the at least one sensor may include identifying the location of the cleaner based on image information obtained from the camera.

The at least one sensor may include an IMU, and the identifying of the location of the cleaner based on the information obtained from the at least one sensor may include identifying the location of the cleaner based on inertial information obtained from the IMU.

The cleaner may further include a radio communication tag capable of communicating with a plurality of wireless communication anchors placed in preset locations, and the outputting of the guidance information may include outputting information about a route to reach a location of the non-cleaned zone from a location of the cleaner based on the location of the cleaner identified based on a signal output from the radio communication tag and received through each of the plurality of wireless communication anchors.

The rout information may include location information of the cleaner on a cleaning map and location information of the non-cleaned zone on the cleaning map.

The route information may include TBT information for the cleaner to reach the non-cleaned zone.

The method may further include transmitting a signal for notifying the external device that cleaning on the non-cleaned zone is completed based on the cleaner completing cleaning on the non-cleaned zone.

The method may further include updating the information about the non-cleaned zone based on the location of the cleaner.

The guidance information may include at least one of the location of the non-cleaned zone, a name of a room in which the non-cleaned zone is located or a cause of occurrence of the non-cleaned zone.

The information about the non-cleaned zone may be obtained by a robot cleaner.

The outputting of the guidance information may be performed by at least one of an emitter, a display, a speaker, a piezo-electric element or a variable element.

The external device may include at least one of a server, a user equipment, a robot cleaner or a docking station.

The receiving of the information about the non-cleaned zone from the external device may include receiving the information about the non-cleaned zone from at least one of the docking station or the robot cleaner through Bluetooth communication.

The receiving of the information about the non-cleaned zone from the external device may include receiving the information about the non-cleaned zone from the server or the user equipment through Wi-Fi communication.

The receiving of the information about the non-cleaned zone from the external device may be performed based on at least one of the cleaner being charged, the cleaner powered on or the cleaner separated from the docking station.

The cleaner may be a manual cleaner including a grippable handle.

According to an embodiment of the disclosure, a cleaning system includes a first cleaner including an output interface and a second cleaner configured to create a cleaning map, wherein the second cleaner is configured to obtain information about a non-cleaned zone while cleaning a space to be cleaned corresponding to the cleaning map, and wherein the first cleaner is configured to output guidance information for guiding the first cleaner to the non-cleaned zone through the output interface based on the information about the non-cleaned zone.

The first cleaner may output the information about the non-cleaned zone on the cleaning map through the output interface.

The first cleaner may output the guidance information based on the cleaner separated from a docking station.

The first cleaner may output the guidance information based on the first cleaner powered on.

The first cleaner may output the guidance information based on reception of a guidance command from the second cleaner.

The first cleaner may include at least one sensor for obtaining information relating to the location of the first cleaner, and may identify the location of the first cleaner based on the information obtained from the at least one sensor, and output information about a route to reach the location of the non-cleaned zone from the first cleaner as the guidance information based on the location of the first cleaner and the location of the non-cleaned zone.

The at least one sensor may include a camera, and the first cleaner may identify a location of the first cleaner based on image information obtained from the camera.

The at least one sensor may include an IMU, and the first cleaner may identify a location of the first cleaner based on inertial information obtained from the IMU.

The first cleaner may include a radio communication tag capable of communicating with a plurality of wireless communication anchors placed in preset locations, and output information about a route to reach a location of the non-cleaned zone from a location of the first cleaner based on the location of the first cleaner identified based on a signal output from the radio communication tag and received through each of the plurality of wireless communication anchors.

The rout information may include location information of the first cleaner on a cleaning map and location information of the non-cleaned zone on the cleaning map.

The route information may include TBT information for the first cleaner to reach the non-cleaned zone.

The first cleaner may transmit a signal for notifying an external device that cleaning on the non-cleaned zone is completed based on the first cleaner completing cleaning on the non-cleaned zone.

The first cleaner may update information about the non-cleaned zone based on the location of the first cleaner.

The guidance information may include at least one of the location of the non-cleaned zone, a name of a room in which the non-cleaned zone is located or a cause of occurrence of the non-cleaned zone.

The output interface may include at least one of an emitter, a display, a speaker, a piezo-electric element or a variable element.

The cleaning system may further include a server, and the second cleaner may transmit information about the non-cleaned zone to the server, and the server may forward the information about the non-cleaned zone to the first cleaner.

The cleaning system may further include a docking station allowing the first cleaner to be coupled thereto; and a server, and the second cleaner may transmit information about the non-cleaned zone to the server, the server may forward the information about the non-cleaned zone to the docking station, and the docking station may transmit the information about the non-cleaned zone to the first cleaner.

The second cleaner may transmit the information about the non-cleaned zone to the first cleaner.

The second cleaner may transmit the information about the non-cleaned zone to an external device based on occurrence of the non-cleaned zone while performing cleaning according to a preset cleaning schedule.

The first cleaner may receive the information about the non-cleaned zone from the external device based on at least one of the first cleaner being charged, the first cleaner powered on or the first cleaner separated from the docking station.

The first cleaner may be a manual cleaner including a grippable handle.

According to an embodiment of the disclosure, a method of controlling a cleaning system including a first cleaner including an output interface and a second cleaner configured to create a cleaning map, includes obtaining, by the second cleaner, information about a non-cleaned zone while cleaning a space to be cleaned corresponding to the cleaning map; and outputting, by the first cleaner, guidance information for guiding the first cleaner to the non-cleaned zone through the output interface based on the information about the non-cleaned zone.

The outputting of the guidance information may include outputting the guidance information based on separation from a docking station.

The outputting of the guidance information may include outputting the guidance information based on the first cleaner powered on.

The outputting of the guidance information may include outputting the guidance information based on reception of a guidance command from the second cleaner.

The method may further include identifying a location of the first cleaner based on information obtained from at least one sensor for obtaining information relating to the location of the first cleaner, and the outputting of the guidance information may include outputting information about a route to reach a location of the non-cleaned zone from the location of the first cleaner based on the location of the first cleaner and the location of the non-cleaned zone.

The at least one sensor may include a camera, and the identifying of the location of the first cleaner may include identifying a location of the first cleaner based on image information obtained from the camera.

The at least one sensor may include an IMU, and the identifying of the location of the first cleaner may include identifying a location of the first cleaner based on inertial information obtained from the IMU.

The first cleaner may include a radio communication tag capable of communicating with a plurality of wireless communication anchors placed in preset locations, and the outputting of the guidance information may include outputting information about a route to reach a location of the non-cleaned zone from a location of the first cleaner based on the location of the first cleaner identified based on a signal output from the radio communication tag and received through each of the plurality of wireless communication anchors.

The rout information may include location information of the first cleaner on a cleaning map and location information of the non-cleaned zone on the cleaning map.

The route information may include TBT information for the first cleaner to reach the non-cleaned zone.

The method may further include transmitting a signal for notifying an external device that cleaning on the non-cleaned zone is completed based on the first cleaner completing cleaning on the non-cleaned zone.

The method may further include updating, by the first cleaner, the information about the non-cleaned zone based on the location of the first cleaner.

The guidance information may include at least one of the location of the non-cleaned zone, a name of a room in which the non-cleaned zone is located or a cause of occurrence of the non-cleaned zone.

The output interface may include at least one of an emitter, a display, a speaker, a piezo-electric element or a variable element.

The method may further include transmitting, by the second cleaner, information about the non-cleaned zone to the server, and forwarding, by the server, the information about the non-cleaned zone to the first cleaner.

The method may further include transmitting, by the second cleaner, information about the non-cleaned zone to the server, forwarding, by the server, the information about the non-cleaned zone to the docking station, and transmitting, by the docking station, the information about the non-cleaned zone to the first cleaner.

The method may further include transmitting, by the second cleaner, the information about the non-cleaned zone to the first cleaner.

The method may further include transmitting, by the first cleaner, the information about the non-cleaned zone to the external device based on completion of cleaning according to preset cleaning schedule.

The method may further include receiving, by the first cleaner, the information about the non-cleaned zone from the external device based on at least one of the first cleaner being charged, the first cleaner powered on or the first cleaner separated from the docking station.

The first cleaner may be a manual cleaner including a grippable handle.

Several embodiments of the disclosure have been described above, but a person of ordinary skill in the art will understand and appreciate that various modifications can be made without departing from the scope of the disclosure. Thus, it will be apparent to those of ordinary skill in the art that the true scope of technical protection is only defined by the following claims.

Meanwhile, the embodiments of the disclosure may be implemented in the form of a recording medium for storing instructions to be carried out by a computer. The instructions may be stored in the form of program codes, and when executed by a processor, may generate program modules to perform operations in the embodiments of the disclosure. The recording media may correspond to computer-readable recording media.

The computer-readable recording medium includes any type of recording medium having data stored thereon that may be thereafter read by a computer. For example, it may be read only memory (ROM), random-access memory (RAM), a magnetic tape, a magnetic disk, flash memory, an optical data storage device, or the like.

The computer-readable storage medium may be provided in the form of a non-transitory storage medium. The term 'non-transitory storage medium' may mean a tangible device without including a signal, e.g., electromagnetic waves, and may not distinguish between storing data in the storage medium semi-permanently and temporarily. For example, the non-transitory storage medium may include a buffer that temporarily stores data.

In an embodiment of the disclosure, the aforementioned method according to the various embodiments of the disclosure may be provided in a computer program product. The computer program product may be a commercial product that may be traded between a seller and a buyer. The computer program product may be distributed in the form of a recording medium (e.g., compact disc read only memory (CD-ROM)), through an application store (e.g., play store^{™}), directly between two user devices (e.g., smart phones), or online (e.g., downloaded or uploaded). In the case of online distribution, at least part of the computer program product (e.g., a downloadable app) may be at least temporarily stored or arbitrarily created in a recording medium that may be readable to a device, such as a server of the manufacturer, a server of the application store, or a relay server.

The embodiments of the disclosure have thus far been described with reference to accompanying drawings. It will be obvious to those of ordinary skill in the art that the disclosure may be practiced in other forms than the embodiments of the disclosure as described above without changing the technical idea or essential features of the disclosure. The above embodiments of the disclosure are only by way of example, and should not be construed in a limited sense.

## Claims

1. A cleaner (5) comprising:
an output interface (570);
a radio communication tag (520d) capable of communicating with a plurality of wireless communication anchors (WA) placed at preset locations;
a communicator (545);
one or more processors (531); and
memory (532) storing one or more computer programs including computer-executable instructions that, when executed by the one or more processors (531), cause the cleaner (5) to:
receive information about a non-cleaned zone (M1) obtained by a robot cleaner (1) through the communicator (545),
identify the location (K1) of the cleaner (5) based on a signal output from the radio communication tag (520d) and received through each of the plurality of wireless communication anchors (WA), and
control the output interface (570) to output guidance information to guide a user of the cleaner (5) to the non-cleaned zone (M1) based on the information about the non-cleaned zone (M1),
wherein the guidance information includes information about a route to reach a location of the non-cleaned zone (M1) from the location (K1) of the cleaner (5).

2. The cleaner of claim 1, wherein the one or more computer programs further comprise computer-executable instructions that, when executed by the one or more processors, cause the cleaner to control the output interface to output the guidance information based on the cleaner separated from a docking station.

3. The cleaner of claim 1, wherein the one or more computer programs further comprise computer-executable instructions that, when executed by the one or more processors, cause the cleaner to control the output interface to output the guidance information based on the cleaner powered on.

4. The cleaner of claim 1, wherein the one or more computer programs further comprise computer-executable instructions that, when executed by the one or more processors, cause the cleaner to control the output interface to output the guidance information based on reception of a guidance command from an external device through the communicator.

5. The cleaner of claim 1, further comprising:
at least one sensor configured to obtain information relating to a location of the cleaner,
wherein the one or more computer programs further comprise computer-executable instructions that, when executed by the one or more processors, cause the cleaner to:
identify the location of the cleaner based on the information obtained from the at least one sensor, and
control the output interface to output information about a route to reach a location of the non-cleaned zone from the location of the cleaner as the guidance information based on the location of the cleaner and the location of the non-cleaned zone.

6. The cleaner of claim 5,
wherein the at least one sensor comprises a camera, and
wherein the one or more computer programs further comprise computer-executable instructions that, when executed by the one or more processors, cause the cleaner to identify a location of the cleaner based on image information obtained from the camera.

7. The cleaner of claim 5,
wherein the at least one sensor comprises an inertial measurement unit (IMU), and
wherein the one or more computer programs further comprise computer-executable instructions that, when executed by the one or more processors, cause the cleaner to identify a location of the cleaner based on inertial information obtained from the IMU.

8. The cleaner of claim 1 or 5, wherein the one or more computer programs further comprise computer-executable instructions that, when executed by the one or more processors, cause the cleaner to control the communicator to transmit a signal for notifying an external device that cleaning on the non-cleaned zone is completed based on the cleaner completing cleaning on the non-cleaned zone.

9. The cleaner of claim 1 or 5, wherein the one or more computer programs further comprise computer-executable instructions that, when executed by the one or more processors, cause the cleaner to update information about the non-cleaned zone based on the location of the cleaner.

10. The cleaner of claim 1, wherein the guidance information comprises at least one of a location of the non-cleaned zone, a name of a room in which the non-cleaned zone is located or a cause of occurrence of the non-cleaned zone.

11. The cleaner of claim 1, wherein the information about the non-cleaned zone is received by the cleaner from an external device through the communicator.

12. A method of controlling a cleaner (5), the method including:
receiving (3000) information about a non-cleaned zone (M1) from an external device (1, 2, 3, 6);
identifying (3100) the location (K1) of the cleaner (5) based on a signal output from a radio communication tag (520d) and received through each of a plurality of wireless communication anchors (WA); and
outputting (3200) guidance information to guide a user of the cleaner (5) to the non-cleaned zone (M1) based on the information about the non-cleaned zone (M1), wherein the guidance information includes information about a route to reach a location of the non-cleaned zone (M1) from the location (K1) of the cleaner (5).

13. The method of claim 12, further comprising:
outputting the guidance information based on the cleaner separated from a docking station.

14. The method of claim 12, further comprising:
outputting the guidance information based on the cleaner powered on.

## Patentansprüche

1. Reiniger (5), umfassend:
eine Ausgabeschnittstelle (570);
ein Funkkommunikations-Tag (520d), das fähig ist, mit einer Vielzahl von an voreingestellten Standorten platzierten drahtlosen Kommunikationsankern (WA) zu kommunizieren;
einen Kommunikator (545);
einen oder mehrere Prozessoren (531); und
einen Speicher (532), der ein oder mehrere Computerprogramme speichert, die computerausführbare Anweisungen beinhalten, die, wenn sie von dem einen oder den mehreren Prozessoren (531) ausgeführt werden, den Reiniger (5) veranlassen:
Informationen über einen nicht gereinigten Bereich (M1), die von einem Reinigungsroboter (1) erhalten werden, über den Kommunikator (545) zu empfangen,
den Standort (K1) des Reinigers (5) basierend auf einem Signal zu identifizieren, das von dem Funkkommunikations-Tag (520d) ausgegeben und über jeden der Vielzahl von drahtlosen Kommunikationsankern (WA) empfangen wird, und
die Ausgabeschnittstelle (570) zu steuern, um Führungsinformationen zum Führen eines Benutzers des Reinigers (5) zu dem nicht gereinigten Bereich (M1) basierend auf den Informationen über den nicht gereinigten Bereich (M1) auszugeben,
wobei die Führungsinformationen Informationen über eine Route zum Erreichen eines Standorts des nicht gereinigten Bereichs (M1) von dem Standort (K1) des Reinigers (5) aus beinhalten.

2. Reiniger nach Anspruch 1, wobei das eine oder die mehreren Computerprogramme ferner computerausführbare Anweisungen umfassen, die, wenn sie von dem einen oder den mehreren Prozessoren ausgeführt werden, den Reiniger veranlassen, die Ausgabeschnittstelle zu steuern, um die Führungsinformationen basierend darauf auszugeben, dass der Reiniger von einer Andockstation getrennt ist.

3. Reiniger nach Anspruch 1, wobei das eine oder die mehreren Computerprogramme ferner computerausführbare Anweisungen umfassen, die, wenn sie von dem einen oder den mehreren Prozessoren ausgeführt werden, den Reiniger veranlassen, die Ausgabeschnittstelle zu steuern, um die Führungsinformationen basierend darauf auszugeben, dass der Reiniger eingeschaltet ist.

4. Reiniger nach Anspruch 1, wobei das eine oder die mehreren Computerprogramme ferner computerausführbare Anweisungen umfassen, die, wenn sie von dem einen oder den mehreren Prozessoren ausgeführt werden, den Reiniger veranlassen, die Ausgabeschnittstelle zu steuern, um die Führungsinformationen basierend auf einem Empfang eines Führungsbefehls von einer externen Vorrichtung über den Kommunikator auszugeben.

5. Reiniger nach Anspruch 1, ferner umfassend:
mindestens einen Sensor, der konfiguriert ist, um Informationen in Bezug auf einen Standort des Reinigers zu erhalten,
wobei das eine oder die mehreren Computerprogramme ferner computerausführbare Anweisungen umfassen, die, wenn sie von dem einen oder den mehreren Prozessoren ausgeführt werden, den Reiniger veranlassen:
den Standort des Reinigers basierend auf den von dem mindestens einen Sensor erhaltenen Informationen zu identifizieren und
die Ausgabeschnittstelle zu steuern, um Informationen über eine Route zum Erreichen eines Standorts des nicht gereinigten Bereichs von dem Standort des Reinigers aus als die Führungsinformationen basierend auf dem Standort des Reinigers und dem Standort des nicht gereinigten Bereichs auszugeben.

6. Reiniger nach Anspruch 5,
wobei der mindestens eine Sensor eine Kamera umfasst, und
wobei das eine oder die mehreren Computerprogramme ferner computerausführbare Anweisungen umfassen, die, wenn sie von dem einen oder den mehreren Prozessoren ausgeführt werden, den Reiniger veranlassen, einen Standort des Reinigers basierend auf von der Kamera erhaltenen Bildinformationen zu identifizieren.

7. Reiniger nach Anspruch 5,
wobei der mindestens eine Sensor eine Trägheitsmessungseinheit (IMU) umfasst und
wobei das eine oder die mehreren Computerprogramme ferner computerausführbare Anweisungen umfassen, die, wenn sie von dem einen oder den mehreren Prozessoren ausgeführt werden, den Reiniger veranlassen, einen Standort des Reinigers basierend auf von der IMU erhaltenen Trägheitsinformationen zu identifizieren.

8. Reiniger nach Anspruch 1 oder 5, wobei das eine oder die mehreren Computerprogramme ferner computerausführbare Anweisungen umfassen, die, wenn sie von dem einen oder den mehreren Prozessoren ausgeführt werden, den Reiniger veranlassen, den Kommunikator zu steuern, um ein Signal zum Benachrichtigen einer externen Vorrichtung darüber, dass die Reinigung des nicht gereinigten Bereichs abgeschlossen ist, basierend darauf zu übertragen, dass der Reiniger die Reinigung des nicht gereinigten Bereichs abschließt.

9. Reiniger nach Anspruch 1 oder 5, wobei das eine oder die mehreren Computerprogramme ferner computerausführbare Anweisungen umfassen, die, wenn sie von dem einen oder den mehreren Prozessoren ausgeführt werden, den Reiniger veranlassen, Informationen über den nicht gereinigten Bereich basierend auf dem Standort des Reinigers zu aktualisieren.

10. Reiniger nach Anspruch 1, wobei die Führungsinformationen mindestens eines von einem Standort des nicht gereinigten Bereichs, einem Namen eines Raums, in dem sich der nicht gereinigte Bereich befindet, oder einer Ursache des Auftretens des nicht gereinigten Bereichs umfassen.

11. Reiniger nach Anspruch 1, wobei die Informationen über den nicht gereinigten Bereich von dem Reiniger über den Kommunikator von einer externen Vorrichtung empfangen werden.

12. Verfahren zum Steuern eines Reinigers (5), wobei das Verfahren umfasst:
Empfangen (3000) von Informationen über einen nicht gereinigten Bereich (M1) von einer externen Vorrichtung (1, 2, 3, 6);
Identifizieren (3100) des Standorts (K1) des Reinigers (5) basierend auf einem Signal, das von einem Funkkommunikations-Tag (520d) ausgegeben und über jeden einer Vielzahl von drahtlosen Kommunikationsankern (WA) empfangen wird; und
Ausgeben (3200) von Führungsinformationen zum Führen eines Benutzers des Reinigers (5) zu dem nicht gereinigten Bereich (M1) basierend auf den Informationen über den nicht gereinigten Bereich (M1), wobei die Führungsinformationen Informationen über eine Route zum Erreichen eines Standorts des nicht gereinigten Bereichs (M1) von dem Standort (K1) des Reinigers (5) aus beinhalten.

13. Verfahren nach Anspruch 12, ferner umfassend:
Ausgeben der Führungsinformationen basierend darauf, dass der Reiniger von einer Andockstation getrennt ist.

14. Verfahren nach Anspruch 12, ferner umfassend:
Ausgeben der Führungsinformationen basierend darauf, dass der Reiniger eingeschaltet ist.

## Revendications

1. Dispositif de nettoyage (5), comprenant :
une interface de sortie (570) ;
une étiquette de communication radio (520d) capable de communiquer avec une pluralité d'ancres de communication sans fil (WA) placées à des lieux prédéfinis ;
un communicateur (545) ;
un ou plusieurs processeurs (531) ; et
une mémoire (532) stockant un ou plusieurs programmes informatiques comprenant des instructions exécutables par ordinateur qui, lorsqu'elles sont exécutées par l'un ou les plusieurs processeurs (531), amènent le dispositif de nettoyage (5) à :
recevoir, par l'intermédiaire du communicateur (545), des informations relatives à une zone non nettoyée (M1) obtenues par un robot de nettoyage (1),
identifier le lieu (K1) du dispositif de nettoyage (5) en se basant sur un signal émis par l'étiquette de communication radio (520d) et reçu par l'intermédiaire de chacune de la pluralité d'ancres de communication sans fil (WA), et
commander l'interface de sortie (570) pour sortir des informations de guidage destinées à guider un utilisateur du dispositif de nettoyage (5) vers la zone non nettoyée (M1) en se basant sur les informations relatives à la zone non nettoyée (M1),
dans lequel les informations de guidage comprennent des informations relatives à un itinéraire permettant d'atteindre un lieu de la zone non nettoyée (M1) à partir du lieu (K1) du dispositif de nettoyage (5).

2. Dispositif de nettoyage de la revendication 1, dans lequel l'un ou les plusieurs programmes informatiques comprennent en outre des instructions exécutables par ordinateur qui, lorsqu'elles sont exécutées par l'un ou les plusieurs processeurs, amènent le dispositif de nettoyage à commander l'interface de sortie pour sortir les informations de guidage en se basant sur le fait que le dispositif de nettoyage est séparé d'une station d'accueil.

3. Dispositif de nettoyage de la revendication 1, dans lequel l'un ou les plusieurs programmes informatiques comprennent en outre des instructions exécutables par ordinateur qui, lorsqu'elles sont exécutées par l'un ou les plusieurs processeurs, amènent le dispositif de nettoyage à commander l'interface de sortie pour sortir les informations de guidage en se basant sur le fait que le dispositif de nettoyage est mis sous tension.

4. Dispositif de nettoyage de la revendication 1, dans lequel l'un ou les plusieurs programmes informatiques comprennent en outre des instructions exécutables par ordinateur qui, lorsqu'elles sont exécutées par l'un ou les plusieurs processeurs, amènent le dispositif de nettoyage à commander l'interface de sortie pour sortir les informations de guidage en se basant sur la réception d'une commande de guidage provenant d'un dispositif externe par l'intermédiaire du communicateur.

5. Dispositif de nettoyage de la revendication 1, comprenant en outre :
au moins un capteur configuré pour obtenir des informations relatives à un lieu du dispositif de nettoyage,
dans lequel l'un ou les plusieurs programmes informatiques comprennent en outre des instructions exécutables par ordinateur qui, lorsqu'elles sont exécutées par l'un ou les plusieurs processeurs, amènent le dispositif de nettoyage à :
identifier le lieu du dispositif de nettoyage en se basant sur les informations obtenues à partir de l'au moins un capteur, et
commander l'interface de sortie pour sortir, en tant qu'informations de guidage, des informations relatives à un itinéraire permettant d'atteindre un lieu de la zone non nettoyée à partir du lieu du dispositif de nettoyage, en se basant sur le lieu du dispositif de nettoyage et le lieu de la zone non nettoyée.

6. Dispositif de nettoyage de la revendication 5,
dans lequel l'au moins un capteur comprend une caméra, et
dans lequel l'un ou les plusieurs programmes informatiques comprennent en outre des instructions exécutables par ordinateur qui, lorsqu'elles sont exécutées par l'un ou les plusieurs processeurs, amènent le dispositif de nettoyage à identifier un lieu du dispositif de nettoyage en se basant sur des informations d'image obtenues à partir de la caméra.

7. Dispositif de nettoyage de la revendication 5,
dans lequel l'au moins un capteur comprend une unité de mesure inertielle (IMU), et
dans lequel l'un ou les plusieurs programmes informatiques comprennent en outre des instructions exécutables par ordinateur qui, lorsqu'elles sont exécutées par l'un ou les plusieurs processeurs, amènent le dispositif de nettoyage à identifier un lieu du dispositif de nettoyage en se basant sur des informations inertielles obtenues à partir de l'IMU.

8. Dispositif de nettoyage de la revendication 1 ou 5, dans lequel l'un ou les plusieurs programmes informatiques comprennent en outre des instructions exécutables par ordinateur qui, lorsqu'elles sont exécutées par l'un ou les plusieurs processeurs, amènent le dispositif de nettoyage à commander le communicateur pour transmettre un signal destiné à notifier à un dispositif externe que le nettoyage de la zone non nettoyée est terminé, en se basant sur le fait que le dispositif de nettoyage achève le nettoyage de la zone non nettoyée.

9. Dispositif de nettoyage de la revendication 1 ou 5, dans lequel l'un ou les plusieurs programmes informatiques comprennent en outre des instructions exécutables par ordinateur qui, lorsqu'elles sont exécutées par l'un ou les plusieurs processeurs, amènent le dispositif de nettoyage à mettre à jour des informations relatives à la zone non nettoyée en se basant sur le lieu du dispositif de nettoyage.

10. Dispositif de nettoyage de la revendication 1, dans lequel les informations de guidage comprennent au moins l'un d'un lieu de la zone non nettoyée, d'un nom d'une pièce dans laquelle se trouve la zone non nettoyée ou d'une cause d'apparition de la zone non nettoyée.

11. Dispositif de nettoyage de la revendication 1, dans lequel les informations relatives à la zone non nettoyée sont reçues par le dispositif de nettoyage en provenance d'un dispositif externe par l'intermédiaire du communicateur.

12. Procédé de commande d'un dispositif de nettoyage (5), le procédé comprenant :
recevoir (3000) des informations relatives à une zone non nettoyée (M1) en provenance d'un dispositif externe (1, 2, 3, 6) ;
identifier (3100) le lieu (K1) du dispositif de nettoyage (5) en se basant sur un signal émis par une étiquette de communication radio (520d) et reçu par l'intermédiaire de chacune d'une pluralité d'ancres de communication sans fil (WA) ; et
sortir (3200) des informations de guidage destinées à guider un utilisateur du dispositif de nettoyage (5) vers la zone non nettoyée (M1) en se basant sur les informations relatives à la zone non nettoyée (M1), dans lequel les informations de guidage comprennent des informations relatives à un itinéraire permettant d'atteindre un lieu de la zone non nettoyée (M1) à partir du lieu (K1) du dispositif de nettoyage (5).

13. Procédé de la revendication 12, comprenant en outre :
sortir les informations de guidage en se basant sur le fait que le dispositif de nettoyage est séparé d'une station d'accueil.

14. Procédé de la revendication 12, comprenant en outre :
sortir les informations de guidage en se basant sur le fait que le dispositif de nettoyage est mis sous tension.
